# EUROPEAN PATENT APPLICATION

(11) **EP 4 694 099 A1**
(43) Date of publication of application: **11.02.2026**
(21) Application number: 24842220.6
(22) Date of filing: 05.07.2024
(51) Int. Cl.: H04M 1/02

(54) **FOLDABLE ELECTRONIC DEVICE**

(30) Priority: 17.07.2023 CN 202310877685
(71) Applicant: Huawei Technologies Co., Ltd., Shenzhen, Guangdong 518129 (CN)
(72) Inventor: LI, Peng, Shenzhen, Guangdong 518129 (CN); MAO, Weihua, Shenzhen, Guangdong 518129 (CN); LV, Ren, Shenzhen, Guangdong 518129 (CN); WANG, Chunyang, Shenzhen, Guangdong 518129 (CN)
(74) Representative: Pfenning, Meinig & Partner mbB
(86) International application number: PCT/CN2024/103944
(87) International publication number: WO 2025/016225

(57) **Abstract**

This application provides a foldable electronic device. The foldable electronic device includes two middle frames, a rotating shaft assembly, a flexible circuit board, and a flexible display. The two middle frames are rotatably connected to two sides of the rotating shaft assembly respectively. The flexible display is laid on the two middle frames and the rotating shaft assembly. The rotating shaft assembly includes a principal shaft. The flexible circuit board includes two fastening parts and a first extension section located between the two fastening parts. The first extension section is disposed in the principal shaft in a penetrating manner. Each middle frame is connected to a mounting member. The fastening part is connected to the mounting member. The mounting member includes a first end and a second end. When the foldable electronic device is in an unfolded state, in a thickness direction of the flexible display, a distance between the first end and the flexible display is less than or equal to a distance between the second end and the flexible display. In a direction parallel to the flexible display, a distance between the first end and the principal shaft is greater than a distance between the second end and the principal shaft, or a direction from the first end to the second end is perpendicular to the flexible display. Therefore, the foldable electronic device provided in this application can reduce a damage probability of the flexible circuit board.

## Description

This application claims priority to Chinese Patent Application No. 202310877685.7, filed with the China National Intellectual Property Administration on July 17, 2023 and entitled "FOLDABLE ELECTRONIC DEVICE", which is incorporated herein by reference in its entirety.

### TECHNICAL FIELD

This application relates to the field of terminal technologies, and in particular, to a foldable electronic device.

### BACKGROUND

As flexible display technologies gradually become mature, display manners of electronic devices change greatly. For example, a flexible display of a foldable electronic device may flexibly change switching modes based on different use scenarios with emergence of foldable electronic devices such as a foldable mobile phone and a computer, and also has a high display-to-body ratio. For example, after being folded, the foldable mobile phone has only a size of a conventional mobile phone, and may be carried around conveniently. In addition, after being unfolded, the foldable mobile phone may have a display size of a tablet computer. These features make a foldable device a popular product.

In a related technology, the foldable electronic device may include two frame bodies, a rotating shaft assembly, and a flexible circuit board. The two frame bodies implement rotatable cooperation through the rotating shaft assembly, so that the two frame bodies can rotate relative to each other, and the two frame bodies can be folded to each other or unfolded away from each other. Electronic components may be disposed in the two frame bodies respectively, the flexible circuit board passes through the rotating shaft assembly, and two ends of the flexible circuit board respectively extend into the two frame bodies to electrically connect to the corresponding electronic components.

However, the foregoing foldable electronic device is prone to damaging the flexible circuit board in a folding process.

### SUMMARY

Embodiments of this application provide a foldable electronic device, so as to reduce a damage probability of a flexible circuit board.

An embodiment of this application provides a foldable electronic device, including two middle frames, a rotating shaft assembly, a flexible circuit board, and a flexible display. The two middle frames are rotatably connected to two sides of the rotating shaft assembly respectively. The flexible display is laid on a same side of a thickness direction of the two middle frames and the rotating shaft assembly. The rotating shaft assembly includes a principal shaft. The flexible circuit board includes two fastening parts and a first extension section located between the two fastening parts. The first extension section is disposed in the principal shaft in a penetrating manner. Each middle frame is connected to a mounting member. The fastening part is connected to the mounting member. The mounting member includes a first end and a second end. When the foldable electronic device is in an unfolded state, in a thickness direction of the flexible display, a distance between the first end and the flexible display is less than or equal to a distance between the second end and the flexible display. In a direction parallel to the flexible display, a distance between the first end and the principal shaft is greater than a distance between the second end and the principal shaft, or a direction from the first end to the second end is perpendicular to the flexible display.

The foldable electronic device provided in this embodiment of this application may include two middle frames, a rotating shaft assembly, a flexible circuit board, and a flexible display. The two middle frames are rotatably connected to two sides of the rotating shaft assembly respectively, and the flexible display is laid on the same side of the thickness direction of the two middle frames and the rotating shaft assembly. The rotating shaft assembly may include a principal shaft, the flexible circuit board includes two fastening parts and a first extension section located between the two fastening parts, and the first extension section is disposed in the principal shaft in a penetrating manner. A mounting member is connected to each middle frame, the fastening part is connected to the mounting member, and the mounting member includes a first end and a second end. When the foldable electronic device is in an unfolded state, in a thickness direction of the flexible display, a distance between the first end and the flexible display is less than or equal to a distance between the second end and the flexible display, and in a direction parallel to the flexible display, a distance between the first end and the principal shaft is greater than a distance between the second end and the principal shaft, or a direction from the first end to the second end is perpendicular to the flexible display. When the mounting members are disposed and the flexible circuit board is fastened to the mounting members, bent sections are formed on the flexible circuit board between the middle frames and the second ends of the mounting members, and the bent sections are fastened by using the mounting members, so that the bent sections are in a fastened state and cannot be deformed. Therefore, a quantity of movable-state bent sections of the flexible circuit board between the two middle frames is reduced, and the total quantity of the movable-state bent sections of the flexible circuit board between the two middle frames is small, so that controllability of a bending form of each movable-state bent section in a folding or unfolding process of the foldable electronic device is improved, and middle parts of the flexible circuit board do not need to be fastened to the rotating shaft assembly. In addition, only the two fastening parts of the flexible circuit board are connected to the two mounting members respectively, the first extension section of the flexible circuit board is not connected to another structural member, no connection structure for connection needs to be disposed, and a distance between the two mounting members is long in the direction parallel to the flexible display, so that a space for the first extension section to move in the foldable electronic device is large, a form of each bent section of the first extension section is gentle, and a bending angle is large, so that the first extension section suffers small bending stress, and therefore a damage probability of the first extension section can be reduced.

In a possible implementation, the principal shaft corresponding to the first extension section has a center line, the center line extends in an extension direction of the principal shaft, and the mounting members of the two middle frames are symmetrically disposed on two sides of the center line.

In this way, in the folding or unfolding process of the foldable electronic device, the two mounting members exert consistent action forces on the first extension section. This helps control the bending form of the first extension section and reduce an offset of the first extension section relative to a preset region.

In a possible implementation, the rotating shaft assembly includes two supporting door plates, the principal shaft includes a principal inner shaft and a principal outer shaft that are connected, the principal outer shaft is located on a side that is of the principal inner shaft and that is far away from the flexible display, the two supporting door plates are both movably connected to the principal shaft, and the two supporting door plates are located on two sides of the principal inner shaft respectively, and are spaced from the principal outer shaft in the thickness direction of the flexible display; the first extension section is disposed in a penetrating manner between the principal inner shaft and the principal outer shaft and between the principal outer shaft and the supporting door plate; and the principal inner shaft, the principal outer shaft, and the two supporting door plates that correspond to the first extension section are all symmetrically disposed along the center line.

In this way, in the folding or unfolding process of the foldable electronic device, the principal inner shaft, the principal outer shaft, and the two supporting door plates exert consistent action forces on the first extension section. This helps control the bending form of the first extension section and reduce the offset of the first extension section relative to the preset region.

In a possible implementation, the first extension section located on one side of the center line includes a plurality of first extension subsections, and the first extension section located on the other side of the center line includes a plurality of second extension subsections; and the first extension subsections are in a one-to-one correspondence with the second extension subsections, in the direction parallel to the flexible display, a distance between the first extension subsection and the center line is equal to a distance between the corresponding second extension subsection and the center line, and in the thickness direction of the flexible display, a ratio of a distance between the first extension subsection and the flexible display to a distance between the corresponding second extension subsection and the flexible display ranges from 0.5 to 2.

In this way, a crease light shadow of the flexible display can be alleviated, display effect of the flexible display can be improved, and a case in which first bent sections are worn and broken can be further alleviated.

In a possible implementation, the first extension section is symmetrically disposed along the center line.

In this way, the crease light shadow of the flexible display can be better alleviated, the display effect of the flexible display can be improved, and the case in which the first bent sections are worn and broken can be further better alleviated.

In a possible implementation, the principal outer shaft includes two first principal outer shaft parts and a second principal outer shaft part located between the two first principal outer shaft parts, and the two first principal outer shaft parts are located on a side that is of the second principal outer shaft part and that is close to the flexible display, and extend in a direction close to the flexible display; and the first extension section includes two first bent sections and a second bent section located between the two first bent sections, the first bent sections are in a one-to-one correspondence with the first principal outer shaft parts, and are bent in a direction close to the flexible display, and the second bent section corresponds to the second principal outer shaft part, and is bent in a direction away from the flexible display.

In this way, the first principal outer shaft parts and the second principal outer shaft part help control bending forms of the first bent section and the second bent section.

In a possible implementation, the first extension section includes two third bent sections, and one third bent section is located on a side that is of one first bent section and that is far away from the second bent section; and the third bent sections are in a one-to-one correspondence with the second ends of the mounting members, and the third bent section is bent in a direction away from the flexible display.

In this way, the second ends of the mounting members help control a bending form of the third bent sections.

In a possible implementation, in one mounting member, the second end includes a first mounting part, a bent part, and a second mounting part that are sequentially connected, the first mounting part is connected to the first end, and the second mounting part is located on a side of a thickness direction of the first mounting part.

In this way, the second mounting part is disposed on the mounting member, so that a thickness of the second end of the mounting member is large, and structural strength of the mounting member can be improved. The bent part is disposed, to avoid that the second end of the mounting member is sharp and then cuts and damages the first extension section, so that the first extension section is protected.

In a possible implementation, a surface of a side that is of the bent part and that is close to the flexible circuit board is an arc surface.

In this way, the bent part can exert a uniform action force on the first extension section, so that it can be avoided that the bent part causes concentrated stress to the first extension section and therefore damages the first extension section.

In a possible implementation, a clamping member is connected to each middle frame, and on a same side of the principal shaft, the mounting member is located on a side that is of the fastening part and that is close to the flexible display, and the clamping member is located on a side that is of the fastening part and that is far away from the flexible display. In this way, the fastening parts may be fastened by using the clamping members.

In a possible implementation, the flexible circuit board includes two second extension sections, one second extension section is located on a side that is of one fastening part and that is far away from the first extension section, each middle frame has an accommodating cavity, a connection member is disposed on a side that is of each middle frame and that is close to the principal shaft, and the connection member is located on a side that is of the rotating shaft assembly and that is far away from the flexible display; and on a same side of the principal shaft, an outer surface of a side that is of the middle frame and that faces the principal shaft has a mating surface, a through hole is provided between the connection member and the mating surface, the through hole is communicated with the accommodating cavity, the clamping member covers a part of the through hole, a gap is provided between the clamping member and the mating surface, and the second extension section penetrates through the gap and extends into the accommodating cavity.

In a possible implementation, the mating surface includes a first mating end close to the flexible display and a second mating end far away from the flexible display, and the first mating end is disposed in an inclined manner in a direction close to the principal shaft. In this way, another structural member can be conveniently installed on the mating surface, and a thickness of a frame side wall of the middle frame corresponding to the mating surface is further improved, so that structural strength of the frame side wall can be improved.

In a possible implementation, an auxiliary mounting member is disposed at the first end of each mounting member, and on a same side of the principal shaft, the auxiliary mounting member is located between the second extension section and the mating surface, a part of the clamping member is located on a side that is of the second extension section and that is far away from the flexible display, and a sealing member is disposed in at least one of the following positions: between the auxiliary mounting member and the mating surface, between the auxiliary mounting member and the second extension section, and between the clamping member and the second extension section.

In this way, external water, dust, and the like can be prevented from entering the accommodating cavity of the corresponding middle frame through the gap between the clamping member and the corresponding mating surface, so that waterproof and dustproof performance of the foldable electronic device can be improved, and working stability of the foldable electronic device can be improved.

In a possible implementation, the foldable electronic device further includes a reinforcement member, where the reinforcement member is located on at least one side of a thickness direction of the fastening part.

In this way, the reinforcement member is disposed, so that structural strength of the fastening part can be improved, the fastening part can be protected, and mounting difficulty of the fastening part can be reduced.

Structures, other objectives, and beneficial effect of this application are clearer and more understandable through descriptions of preferred embodiments with reference to accompanying drawings.

### BRIEF DESCRIPTION OF DRAWINGS

FIG. 1 is a partial sectional view of a foldable electronic device in an unfolded state according to a related technology;
FIG. 2 is a diagram of a structure of a foldable electronic device in a folded state according to an embodiment of this application;
FIG. 3 is a diagram of a structure of a foldable electronic device in an intermediate state according to an embodiment of this application;
FIG. 4 is a diagram of a structure of a foldable electronic device in an unfolded state according to an embodiment of this application;
FIG. 5 is a split diagram of a foldable electronic device according to an embodiment of this application;
FIG. 6 is a top view of a foldable electronic device from which a rear cover is removed according to an embodiment of this application;
FIG. 7 is a top view of a flexible circuit board that is disposed in a rotating shaft assembly in a penetrating manner according to an embodiment of this application;
FIG. 8 is a diagram of a partial structure of a flexible circuit board that is disposed in a rotating shaft assembly in a penetrating manner according to an embodiment of this application;
FIG. 9 is a diagram of another partial structure of a flexible circuit board that is disposed in a rotating shaft assembly in a penetrating manner according to an embodiment of this application;
FIG. 10 is a partial split diagram of a flexible circuit board and a rotating shaft assembly according to an embodiment of this application;
FIG. 11 is a partial split diagram of a flexible circuit board, a principal shaft, mounting members, and clamping members according to an embodiment of this application;
FIG. 12a is a split diagram of a flexible circuit board, middle frames, connection members, mounting members, and clamping members according to an embodiment of this application;
FIG. 12b is a diagram of a partial structure of FIG. 12a;
FIG. 12c is a partial split diagram of a flexible circuit board, middle frames, connection members, mounting members, and clamping members according to an embodiment of this application;
FIG. 13a is a diagram of a partial structure of a foldable electronic device from which a rear cover is removed according to an embodiment of this application;
FIG. 13b is a diagram of a partial structure of mounting members disposed at through holes according to an embodiment of this application;
FIG. 14 is a diagram of a partial structure of mounting members and auxiliary mounting members disposed at through holes according to an embodiment of this application;
FIG. 15 is a partial sectional view of a foldable electronic device in an unfolded state according to an embodiment of this application;
FIG. 16 is another partial sectional view of a foldable electronic device in an unfolded state according to an embodiment of this application;
FIG. 17 is another partial sectional view of a foldable electronic device in an unfolded state according to an embodiment of this application;
FIG. 18 is a partial sectional view of a foldable electronic device in a folded state according to an embodiment of this application;
FIG. 19 is another partial sectional view of a foldable electronic device in an unfolded state according to an embodiment of this application;
FIG. 20 is another partial sectional view of a foldable electronic device in an unfolded state according to an embodiment of this application; and
FIG. 21 is another partial sectional view of a foldable electronic device in an unfolded state according to an embodiment of this application.

### Description of reference numerals:

11a: first frame body; 11b: second frame body; 111: mounting surface;
1111: first mounting end; 1112: second mounting end; 12: principal shaft structure;
13: flexible display screen; 14: shaft-penetrating flexible circuit board; 14a: first movable section;
14b: second movable section; 14c: middle part; 15: door plate;
100: foldable electronic device; 110: rear cover; 120: middle frame;
120a: first middle frame; 120b: second middle frame; 121: accommodating cavity;
122: mating surface; 122a: first mating surface; 122b: second mating surface;
1221: first mating end; 1222: second mating end; 130: connection member;
130a: first connection member; 130b: second connection member; 140: rotating shaft assembly;
141: principal shaft; 1411: principal inner shaft; 1412: principal outer shaft;
1412a: first principal outer shaft part; 1412b: second principal outer shaft part; 1412c: shaft body;
1412d: protection member; 142: supporting door plate; 142a: first supporting door plate;
142b: second supporting door plate; 143: support; 143a: first support;
143b: second support; 144: linkage member; 144a: first linkage member;
144b: second linkage member; 145: swing member; 145a: first swing member;
145b: second swing member; 150: flexible display; 160: flexible circuit board;
161: first extension section; 1611: first extension subsection; 1612: second extension subsection;
162: second extension section; 163: fastening part; 1631: first fastening part;
1632: second fastening part; 160a: first bent section; 160b: second bent section;
160c: third bent section; 160d: fourth bent section; 171: mounting member;
171a: first mounting member; 171b: second mounting member; 1711: first end;
1712: second end; 1712a: first mounting part; 1712b: second mounting part;
1712c: bent part; 172: clamping member; 172a: first clamping member;
172b: second clamping member; 173: reinforcement member; 174: auxiliary mounting member;
174a: first auxiliary mounting member; 174b: second auxiliary mounting member; 181: through hole;
181a: first through hole; 181b: second through hole; 182: gap;
182a: first gap; 182b: second gap; 183: sealing member;
184: wiring space; 1841: first wiring space; 1842: second wiring space;
1843: third wiring space; 1844: fourth wiring space; 1845: fifth wiring space;
185: via hole; 185a: first via hole; 185b: second via hole;
186: display accommodating space; 187: avoidance groove; 188: bonding member;
191: battery; 192: circuit board; and 194: fastener.

### DESCRIPTION OF EMBODIMENTS

Terms used in the embodiments of this application are only used to explain specific embodiments of this application, but are not intended to limit this application.

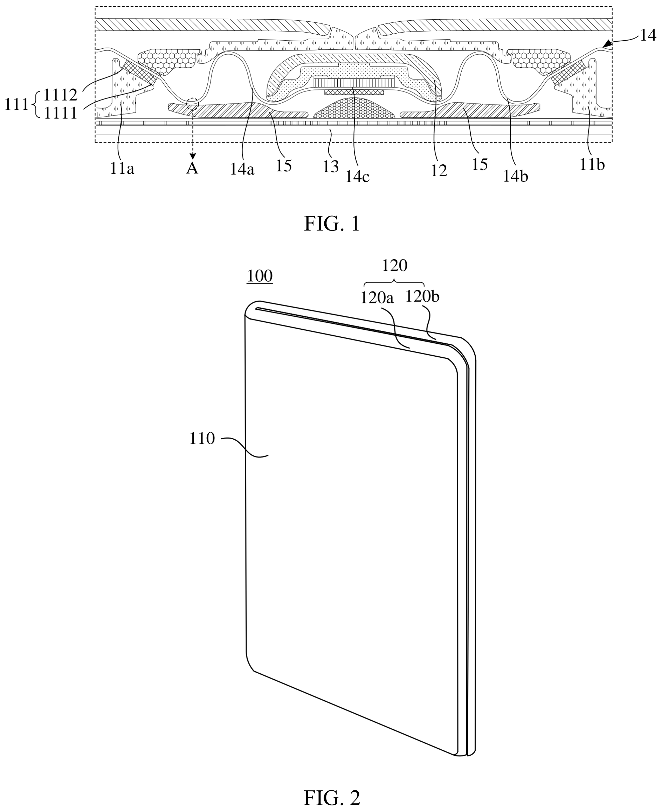

As shown in FIG. 1, a foldable electronic device may include a first frame body 11a, a second frame body 11b, a principal shaft structure 12, a flexible display screen 13, and a shaft-penetrating flexible circuit board 14. A first electronic component is disposed in the first frame body 11a, and a second electronic component is disposed in the second frame body 11b. The first frame body 11a and the second frame body 11b are located on two sides of a width direction of the principal shaft structure 12 respectively, and are rotatably connected through the principal shaft structure 12. A middle part 14c of the shaft-penetrating flexible circuit board 14 penetrates through the principal shaft structure 12, one end of the shaft-penetrating flexible circuit board 14 extends into the first frame body 11a and is electrically connected to the first electronic component, and the other end of the shaft-penetrating flexible circuit board 14 extends into the second frame body 11b and is electrically connected to the second electronic component, so that the first electronic component and the second electronic component are electrically connected through the shaft-penetrating flexible circuit board 14. An outer surface of a side that is of the first frame body 11a and the second frame body 11b and that faces the principal shaft structure 12 has a mounting surface 111. The mounting surface 111 includes a first mounting end 1111 close to the flexible display screen 13 and a second mounting end 1112 far away from the flexible display screen 13. The first mounting end 1111 is disposed in an included manner in a direction close to the principal shaft structure 12. Two ends of the shaft-penetrating flexible circuit board 14 are connected to the mounting surfaces 111 of the first frame body 11a and the second frame body 11b respectively, and the middle part 14c of the shaft-penetrating flexible circuit board 14 is connected to the principal shaft structure 12, so as to implement positioning on the shaft-penetrating flexible circuit board 14.

However, a shaft-penetrating flexible circuit board 14 on one side (the left side of FIG. 1) of the principal shaft structure 12 is used as an example. Because the first mounting end 1111 close to the flexible display screen 13 is disposed in the inclined manner in the direction close to the principal shaft structure 12, when the shaft-penetrating flexible circuit board 14 is fastened to the mounting surfaces 111, the shaft-penetrating flexible circuit board 14 between the mounting surface 111 and the principal shaft structure 12 extends approximately in a direction along the mounting surface 111 and close to the flexible display screen 13, and changes an extension direction in a position A close to a door plate 15 to form a bent section. The bent section is not fastened and is in a deformable movable state, so that a quantity of movable-state bent sections of the shaft-penetrating flexible circuit board 14 located between the two mounting surfaces 111 is increased. Consequently, the total quantity of the bent sections of the shaft-penetrating flexible circuit board 14 between the two mounting surfaces 111 is large, and controllability of a bending form of each bent section in a folding or unfolding process of the foldable electronic device is low. The middle part 14c of the shaft-penetrating flexible circuit board 14 may be fastened to the principal shaft structure 12, so that the quantity of the movable-state bent sections of the shaft-penetrating flexible circuit board 14 located between the middle part 14c and the mounting surfaces 111 is small, and the controllability of the bending form of the movable-state bent sections in the folding or unfolding process of the foldable electronic device is improved. The shaft-penetrating flexible circuit board 14 between the middle part 14c and the two mounting surfaces 111 may include a first movable section 14a and a second movable section 14b, and neither the first movable section 14a nor the second movable section 14b is connected to another structural member and is in a movable state. However, when the middle part 14c of the shaft-penetrating flexible circuit board 14 is fastened, because a distance between the principal shaft structure 12 and the mounting surface 111 in a direction parallel to the flexible display screen 13 is short, a space for the first movable section 14a and the second movable section 14b to move is small, a form of each bent section of the first movable section 14a and the second movable section 14b is compact, a bending angle is small, local overbending is prone to occurrence, and consequently the first movable section 14a and the second movable section 14b are subject to large bending stress, and the first movable section 14a and the second movable section 14b are prone to damage.

Based on the foregoing problem, an embodiment of this application provides a foldable electronic device. The foldable electronic device may include two middle frames, a rotating shaft assembly, a flexible circuit board, and a flexible display. The two middle frames are rotatably connected to two sides of the rotating shaft assembly respectively, and the flexible display is laid on a same side of a thickness direction of the two middle frames and the rotating shaft assembly. The rotating shaft assembly may include a principal shaft, the flexible circuit board includes two fastening parts and a first extension section located between the two fastening parts, and the first extension section is disposed in the principal shaft in a penetrating manner. A mounting member is connected to each middle frame, the fastening part is connected to the mounting member, and the mounting member includes a first end and a second end. When the foldable electronic device is in an unfolded state, in a thickness direction of the flexible display, a distance between the first end and the flexible display is less than or equal to a distance between the second end and the flexible display, and in a direction parallel to the flexible display, a distance between the first end and the principal shaft is greater than a distance between the second end and the principal shaft, or a direction from the first end to the second end is perpendicular to the flexible display. When the mounting members are disposed and the flexible circuit board is fastened to the mounting members, bent sections are formed on the flexible circuit board between the middle frames and the second ends of the mounting members, and the bent sections are fastened by using the mounting members, so that the bent sections are in a fastened state and cannot be deformed. Therefore, a quantity of movable-state bent sections of the flexible circuit board between the two middle frames is reduced, and the total quantity of the movable-state bent sections of the flexible circuit board between the two middle frames is small, so that controllability of a bending form of each movable-state bent section in a folding or unfolding process of the foldable electronic device is improved, and middle parts of the flexible circuit board do not need to be fastened to the rotating shaft assembly. In addition, only the two fastening parts of the flexible circuit board are connected to the two mounting members respectively, the first extension section of the flexible circuit board is not connected to another structural member, no connection structure for connection needs to be disposed, and a distance between the two mounting members is long in the direction parallel to the flexible display, so that a space for the first extension section to move in the foldable electronic device is large, a form of each bent section of the first extension section is gentle, and a bending angle is large, so that the first extension section suffers small bending stress, and therefore a damage probability of the first extension section can be reduced.

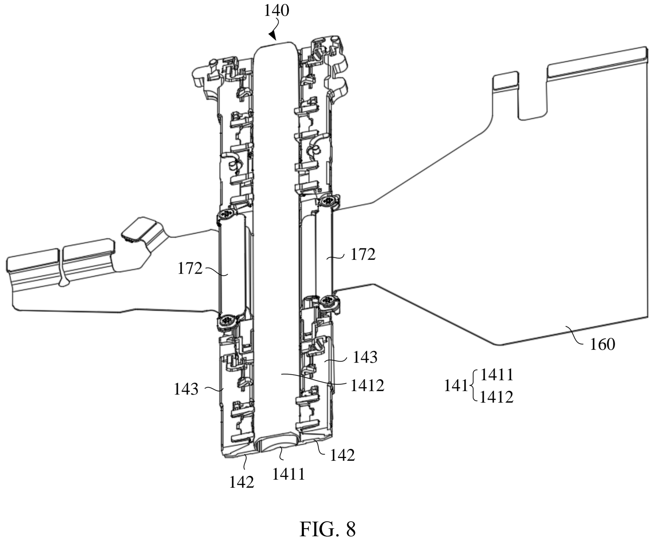

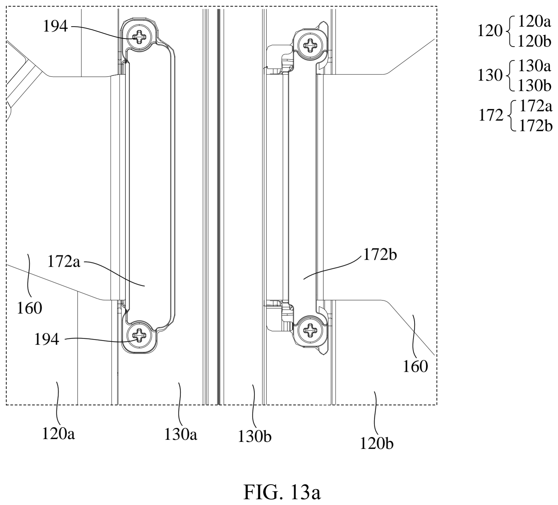

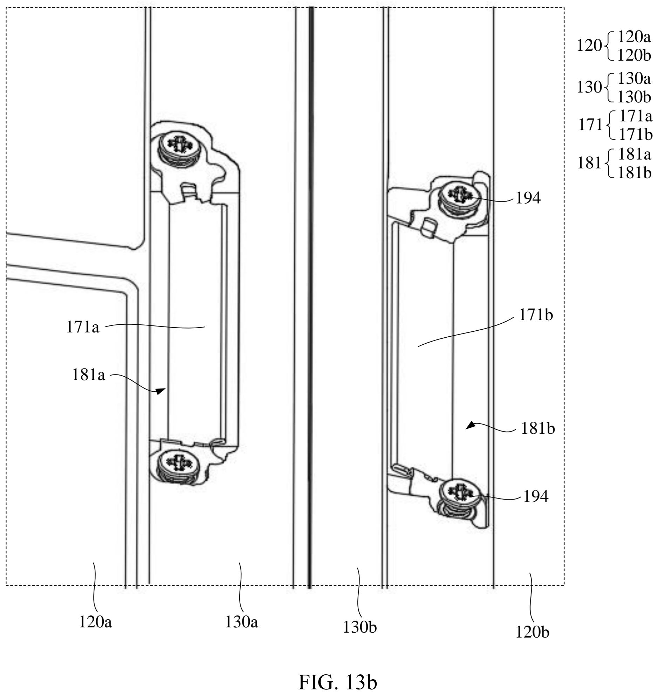

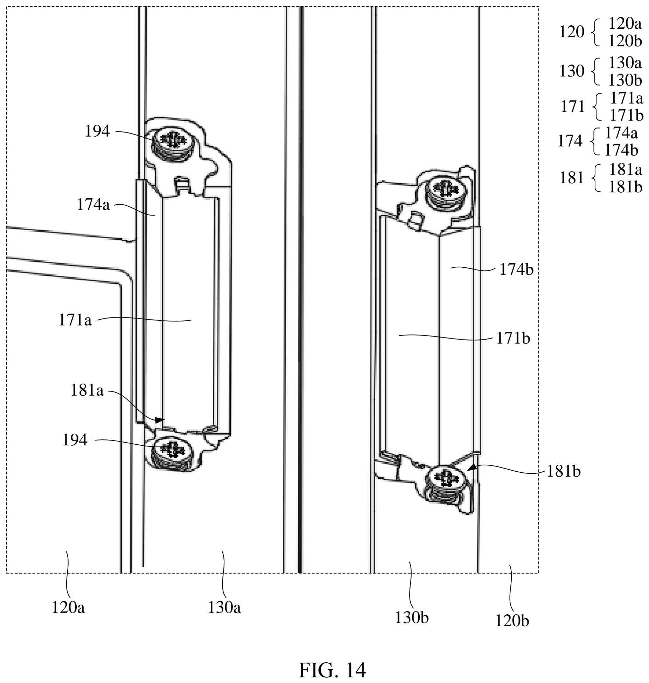

The following describes a foldable electronic device 100 provided in an embodiment of this application with reference to FIG. 1 to FIG. 21.

An embodiment of this application provides a foldable electronic device 100. The foldable electronic device 100 may include but is not limited to a foldable fixed terminal or mobile terminal like a mobile phone, a tablet computer, a notebook computer, an ultra-mobile personal computer (ultra-mobile personal computer, UMPC), a handheld computer, a touch television, a walkie-talkie, a netbook, a POS terminal, a personal digital assistant (personal digital assistant, PDA), a wearable device, or a virtual reality device.

As shown in FIG. 1 and FIG. 2, the foldable electronic device 100 may include a rotating shaft assembly 140 and a middle frame 120. There may be at least one middle frame 120. In some examples, there may be one middle frame 120, and one middle frame 120 may be rotatably connected to the rotating shaft assembly 140, so that the rotating shaft assembly 140 and the middle frame 120 are folded or unfolded. In another example, there may be two middle frames 120. For example, the two middle frames 120 may include a first middle frame 120a and a second middle frame 120b, and the first middle frame 120a and the second middle frame 120b may be located on two sides of the rotating shaft assembly 140. The first middle frame 120a and the second middle frame 120b may be rotatably connected to the rotating shaft assembly 140, so that the first middle frame 120a and the second middle frame 120b may rotate relative to each other. When the foldable electronic device 100 is in a folded state, the first middle frame 120a and the second middle frame 120b are folded into two layers. In some other examples, a quantity of middle frames 120 of the foldable electronic device 100 may be greater than two. That is, a quantity of at least one of the first middle frame 120a and the second middle frame 120b may be plural. The first middle frame 120a and the second middle frame 120b that are adjacent are rotatably connected through the rotating shaft assembly 140, so that the foldable electronic device 100 may be folded into a form of a plurality of layers. For example, the foldable electronic device 100 may include two first middle frames 120a, one second middle frame 120b, and two rotating shaft assemblies 140. The two first middle frames 120a are located on two sides of the second middle frame 120b, and the two first middle frames 120a are rotatably connected to the second middle frame 120b respectively through one rotating shaft assembly 140. One first middle frame 120a and the second middle frame 120b may be folded relative to each other, and the other first middle frame 120a and the second middle frame 120b may also be folded relative to each other, so that when the foldable electronic device 100 is in a folded state, the two first middle frames 120a and the second middle frame 120b are folded into a form of three layers.

In this embodiment of this application, an example in which there are two middle frames 120 is used for description.

As shown in FIG. 2, the first middle frame 120a and the second middle frame 120b can be folded relative to each other to a closed state. For example, in the closed state, the first middle frame 120a and the second middle frame 120b can be folded (a small deviation is also allowed). In this case, the foldable electronic device 100 is in the closed state that is also referred to as a folded state.

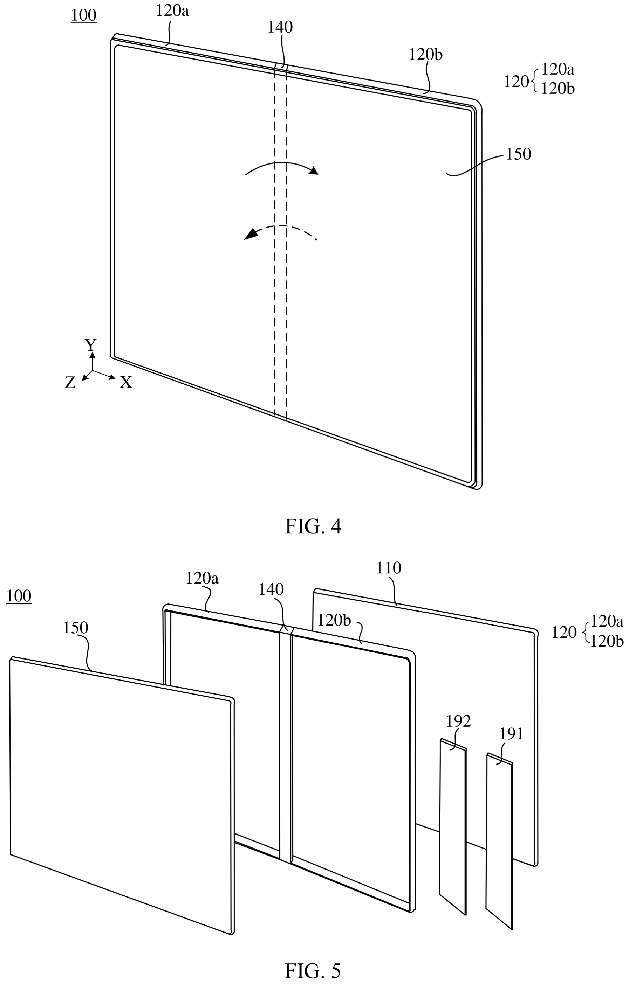

As shown in FIG. 4, the first middle frame 120a and the second middle frame 120b can be unfolded relative to each other to an open state. For example, in the open state, the first middle frame 120a and the second middle frame 120b may approximately form 180 degrees (a small deviation is also allowed, for example, 165 degrees, 177 degrees, or 185 degrees). In this case, the foldable electronic device 100 is in the open state that is also referred to as an unfolded state.

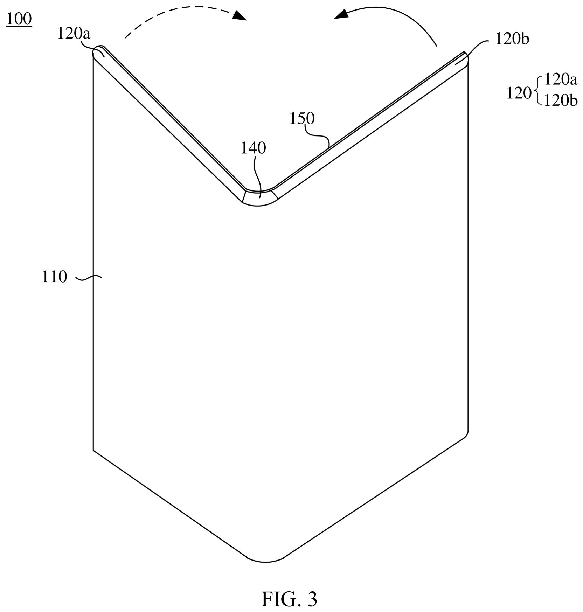

As shown in FIG. 3, the first middle frame 120a and the second middle frame 120b can be rotated (folded or unfolded) to an intermediate state, so that the foldable electronic device 100 is in an intermediate state. The intermediate state may be any state between the folded state and the unfolded state. That is, the foldable electronic device 100 may switch between the folded state and the unfolded state through moving of the rotating shaft assembly 140.

In this embodiment of this application, as shown in FIG. 4, the foldable electronic device 100 may include a first direction X, a second direction Y, and a third direction Z, and the first direction X, the second direction Y, and the third direction Z are different. The first direction X and the second direction Y may be any two different directions parallel to a flexible display 150, and the third direction Z may be any direction intersecting the flexible display 150. For example, the first direction X, the second direction Y, and the third direction Z may be perpendicular to each other. For example, the first direction X may be a width direction of the foldable electronic device 100, the second direction Y may be a length direction of the foldable electronic device 100, and the third direction Z may be a thickness direction of the foldable electronic device 100. A length, a width, a thickness, and the like in embodiments of this application are merely for ease of description, and do not mean any limitation on a size. For example, the width may be greater than, equal to, or less than the length.

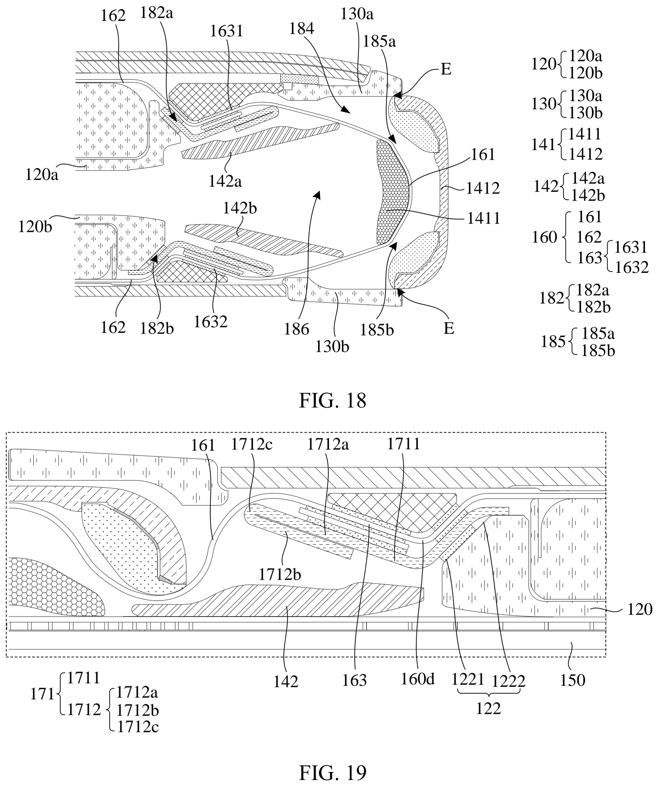

As shown in FIG. 4 and FIG. 5, the foldable electronic device 100 may include the foldable flexible display 150. The flexible display 150 may be laid on at least one of the first middle frame 120a and the second middle frame 120b. In addition, the flexible display 150 may be laid on the rotating shaft assembly 140. For example, the flexible display 150 may be laid on surfaces of a same side of the first middle frame 120a, the second middle frame 120b, and the rotating shaft assembly 140. The first middle frame 120a and the second middle frame 120b may be configured to support planar regions of the flexible display 150. The middle frames 120 may directly support (for example, contact and support) or may indirectly support (for example, support through an intermediate structural member) planar parts of the flexible display 150. For example, when the first middle frame 120a and the second middle frame 120b are folded relative to each other, a bent region that is of the flexible display 150 and that is opposite to the rotating shaft assembly 140 is bent, the rotating shaft assembly 140 encloses a display accommodating space 186 (FIG. 18), and at least a part of the bent region of the flexible display 150 may be located in the display accommodating space 186. When the first middle frame 120a and the second middle frame 120b are unfolded relative to each other, the flexible display 150 is also unfolded accordingly.

For the foldable electronic device 100 whose display is folded inward, the flexible display 150 is disposed on an inner surface of the first middle frame 120a, the second middle frame 120b, and the rotating shaft assembly 140. For the foldable electronic device 100 whose display is folded outward, the flexible display 150 is disposed on an outer surface of the first middle frame 120a, the second middle frame 120b, and the rotating shaft assembly 140. In this embodiment of this application, the foldable electronic device 100 whose display is folded inward is used as an example for description. When the foldable electronic device 100 is in the folded state, two adjacent and opposite surfaces of the first middle frame 120a and the second middle frame 120b are inner surfaces of the first middle frame 120a and the second middle frame 120b respectively, and a surface of the rotating shaft assembly 140 on a same side as the inner surfaces of the first middle frame 120a and the second middle frame 120b is the inner surface of the rotating shaft assembly 140. The other surface disposed opposite to the inner surface in the thickness direction of the foldable electronic device 100 is the outer surface.

In some embodiments, as shown in FIG. 5, the foldable electronic device 100 may include a rear cover 110, a circuit board 192, and a battery 191. For example, the flexible display 150 may be located on one side of the two middle frames 120, the rear cover 110 may be located on the other side of the two middle frames 120, and at least one of the circuit board 192 and the battery 191 may be located between the middle frames 120 and the rear cover 110, or may be located between the middle frames 120 and the flexible display 150.

It may be understood that the structure shown in this embodiment of this application does not constitute a specific limitation on the foldable electronic device 100. In some other embodiments of this application, the foldable electronic device 100 may include more or fewer components than those shown in the figure, or some components may be combined, or some components may be split, or different component arrangements may be used. For example, the foldable electronic device 100 may include components such as a camera and a flash.

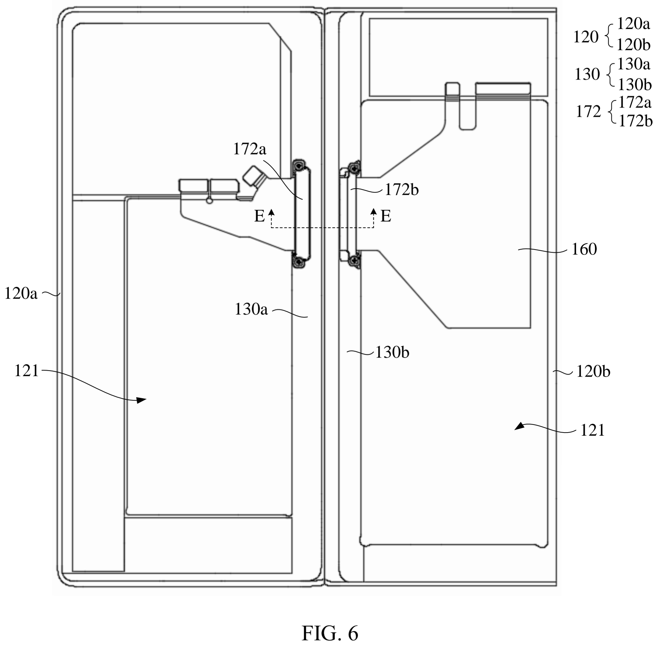

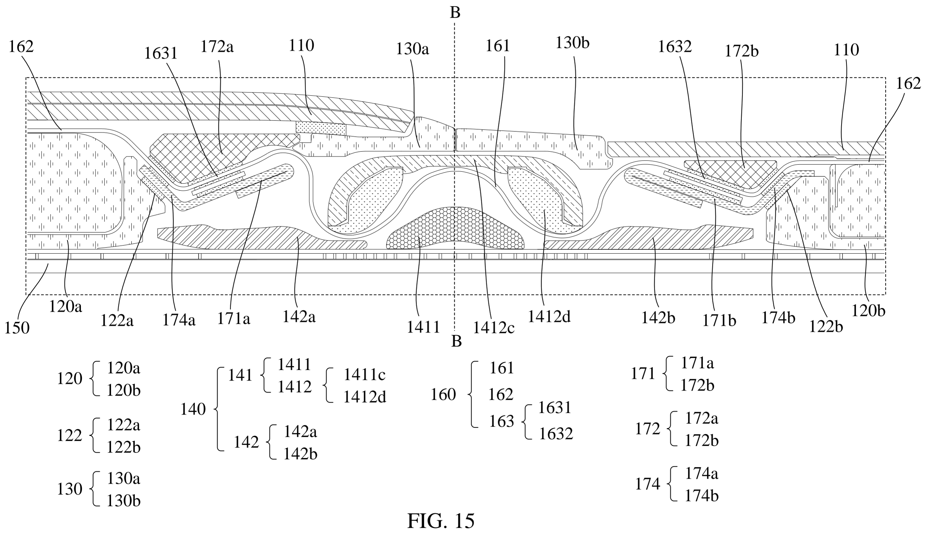

In some embodiments, as shown in FIG. 6 and FIG. 15 (a sectional view position of FIG. 15 corresponds to a position of an E-E section line in FIG. 6), a connection member 130 may be disposed on a side that is of each middle frame 120 and that is close to a principal shaft 141, and the connection members 130 may be located on a side that is of the rotating shaft assembly 140 and that is far away from the flexible display 150. When the foldable electronic device 100 is in the unfolded state, the connection members 130 may block the side that is of the rotating shaft assembly 140 and that is far away from the flexible display 150, so as to protect the rotating shaft assembly 140. The connection members 130 may include a first connection member 130a and a second connection member 130b. The first connection member 130a is fastened to the first middle frame 120a, and the second connection member 130b is fastened to the second middle frame 120b. For example, a surface of a side that is of the first connection member 130a and the second connection member 130b and that faces the flexible display 150 and a surface of a side that is of the first middle frame 120a and the second middle frame 120b and that faces the rotating shaft assembly 140 jointly enclose a space for accommodating the rotating shaft assembly 140.

The following describes the rotating shaft assembly 140 provided in embodiments of this application.

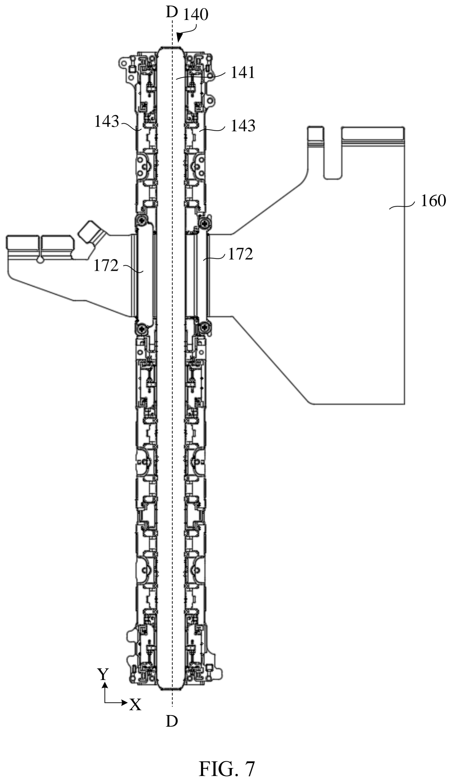

In some embodiments, as shown in FIG. 7 to FIG. 9, the rotating shaft assembly 140 may include a principal shaft 141, the principal shaft 141 may include a principal inner shaft 1411 and a principal outer shaft 1412 that are connected, and the principal inner shaft 1411 and the principal outer shaft 1412 may be disposed opposite to each other in the thickness direction of the foldable electronic device 100. The principal inner shaft 1411 may be located on a side that is of the principal outer shaft 1412 and that is close to the flexible display 150. The principal shaft 141 may be used as a positioning structure in the rotating shaft assembly 140 to support other structural members of the rotating shaft assembly 140 in an extension direction of the principal shaft 141. In addition, the principal shaft 141 may be used as an appearance part of the rotating shaft assembly 140. For example, when the foldable electronic device 100 is in the folded state, the principal inner shaft 1411 may be located inside the rotating shaft assembly 140, the principal inner shaft 1411 may be hidden inside the rotating shaft assembly 140, the principal outer shaft 1412 may be located outside the rotating shaft assembly 140, and the principal outer shaft 1412 is exposed to a gap formed when the two middle frames 120 rotate relative to each other, so as to form the appearance part of the rotating shaft assembly 140.

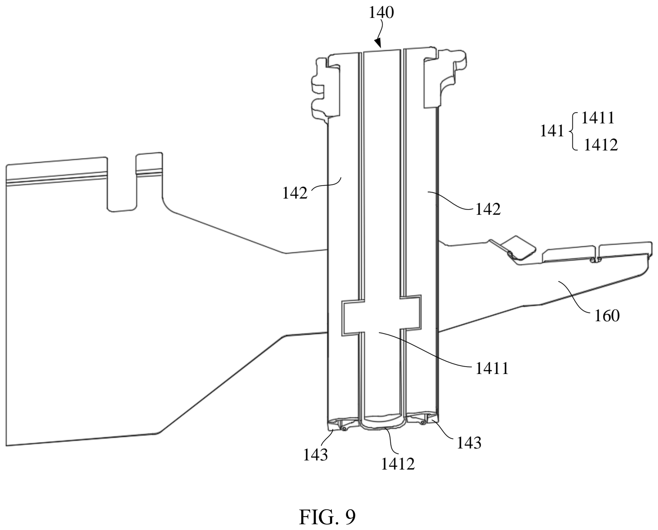

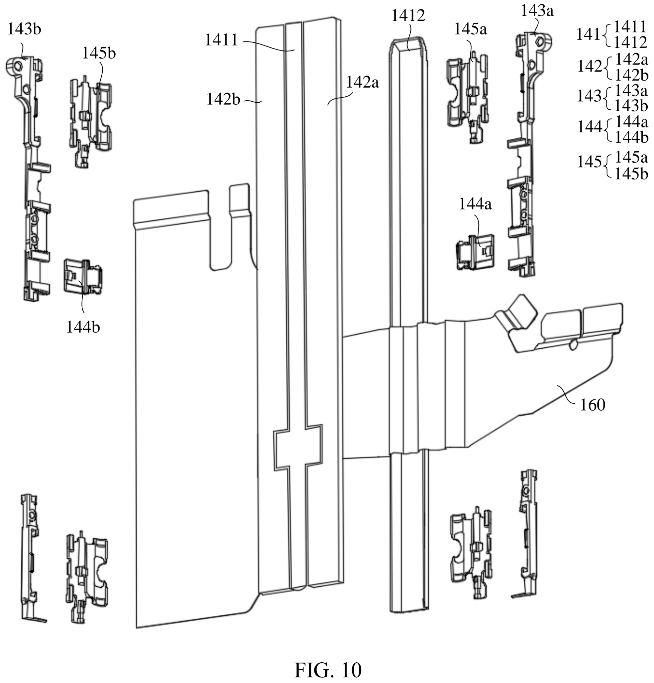

In some embodiments, as shown in FIG. 9 and FIG. 10, the rotating shaft assembly 140 may include a support 143, and a quantity of supports 143 located on one side of a width direction of the principal shaft 141 may be at least one. When the quantity of the supports 143 located on one side of the width direction of the principal shaft 141 is plural, the plurality of supports 143 may be arranged in an extension direction (also a length direction) of the rotating shaft assembly 140. The support 143 may be located on at least one side of the width direction of the principal shaft 141. In this embodiment of this application, an example in which the supports 143 are located on two sides of the width direction of the principal shaft 141 is used for description. Both the supports 143 on the two sides of the principal shaft 141 may be rotatably connected to the principal shaft 141, so that the two supports 143 can rotate relative to each other. One support 143 may be correspondingly fastened to one middle frame 120, and the support 143 may be directly connected or may be indirectly connected through another structural member (for example, the connection member 130) to the corresponding middle frame 120. When a user drives the two middle frames 120 to rotate relative to each other, the two middle frames 120 may drive the two supports 143 to rotate relative to each other respectively. For example, the supports 143 may include a first support 143a and a second support 143b that are located on the two sides of the principal shaft 141. Both the first support 143a and the second support 143b are rotatably connected to the principal shaft 141. The first support 143a may be fastened to the first middle frame 120a, and the second support 143b may be fastened to the second middle frame 120b.

In some embodiments, as shown in FIG. 10, the rotating shaft assembly 140 may include linkage members 144, and the principal shaft 141 and the supports 143 may be rotatably connected through the linkage members 144. At least one linkage member 144 may be disposed between each support 143 and the principal shaft 141. One end of the linkage member 144 may be rotatably connected to the principal shaft 141, and the other end of the linkage member 144 may be slidably connected to the support 143. For example, the linkage members 144 may include a first linkage member 144a and a second linkage member 144b that are located on the two sides of the principal shaft 141. The first linkage member 144a may be connected to the first support 143a and the principal shaft 141, and the second linkage member 144b may be connected to the second support 143b and the principal shaft 141.

In some embodiments, as shown in FIG. 10, the rotating shaft assembly 140 may include swing members 145, and the principal shaft 141 and the supports 143 may be rotatably connected through the swing members 145. At least one swing member 145 may be disposed between each support 143 and the principal shaft 141. One end of the swing member 145 may be rotatably connected to the principal shaft 141, and the other end of the swing member 145 may be rotatably connected or fastened to the support 143. For example, the swing members 145 may include a first swing member 145a and a second swing member 145b that are located on the two sides of the principal shaft 141. The first swing member 145a may be connected to the first support 143a and the principal shaft 141, and the second swing member 145b may be connected to the second support 143b and the principal shaft 141.

When the middle frame 120 is rotated, the middle frame 120 may drive the corresponding support 143 to rotate, and the support 143 drives the corresponding swing member 145 and the corresponding linkage member 144 to rotate relative to the principal shaft 141. For example, the rotating shaft assembly 140 may include a hinge assembly. The hinge assembly may be installed between the principal inner shaft 1411 and the principal outer shaft 1412. The linkage member 144 may be rotatably connected to the hinge assembly, so as to be rotatably connected to the principal shaft 141.

In some embodiments, as shown in FIG. 10, the rotating shaft assembly 140 may include two supporting door plates 142. The supporting door plate 142 may be located between the support 143 and the flexible display 150, and the supporting door plate 142 may extend in the extension direction of the principal shaft 141. In the unfolded state of the foldable electronic device 100, the supporting door plates 142 may be configured to support the flexible display 150, to provide stable support for the bent region of the flexible display 150, and ensure flatness of the flexible display 150 in the unfolded state. The two supporting door plates 142 may be located on two sides of a width direction of the principal inner shaft 1411 respectively. In the folded state of the foldable electronic device 100, the two supporting door plates 142 and the principal inner shaft 1411 jointly form the display accommodating space 186 (FIG. 18). For example, the supporting door plate 142 may be an integrated structure, or the supporting door plate 142 may be formed by splicing a plurality of door plates.

For example, the support 143 and the corresponding supporting door plate 142 may be movably connected, and the supporting door plate 142 and the corresponding support 143 may be connected rotatably, slidably, or in another connection manner with a degree of freedom. In this embodiment of this application, an example in which the supporting door plate 142 is rotatably connected to the corresponding support 143 is used for description. An arc-shaped arm may be disposed on one of the supporting door plate 142 and the support 143, and an arc-shaped groove may be disposed in the other of the supporting door plate 142 and the support 143. The arc-shaped arm may be inserted into the arc-shaped groove and slide along the arc-shaped groove, so that the arc-shaped arm and the arc-shaped groove implement rotatable cooperation, and the supporting door plate 142 and the support 143 are rotatably connected through the cooperation between the arc-shaped arm and the arc-shaped groove.

For example, the supporting door plate 142 and the principal shaft 141 may be movably connected, and the supporting door plate 142 and the principal shaft 141 may be connected rotatably, slidably, or in another connection manner with a degree of freedom. In this embodiment of this application, an example in which the supporting door plate 142 is slidably connected to the principal shaft 141 is used for description. A chute (for example, an arc-shaped chute) may be disposed in the supporting door plate 142, a pin may be disposed on the principal shaft 141, and the pin is disposed in the chute in a penetrating manner and slides along the chute, so that the supporting door plate 142 and the principal shaft 141 can be slidably connected. Alternatively, a pin may be disposed on the swing member 145 and/or the linkage member 144, and the hinge is disposed in a chute in a penetrating manner and slides along the chute, so that the swing member 145 and/or the linkage member 144 may be slidably connected to the supporting door plate 142 through the cooperation between the pin and the chute, and the supporting door plate 142 may implement sliding connection with respect to the principal shaft 141.

For example, as shown in FIG. 10, the supporting door plates 142 may include a first supporting door plate 142a and a second supporting door plate 142b that are located on the two sides of the principal shaft 141. The first supporting door plate 142a may be located between the first support 143a and the flexible display 150, and is rotatably connected to the first support 143a. The second supporting door plate 142b may be located between the second support 143b and the flexible display 150, and is rotatably connected to the second support 143b. Both the first supporting door plate 142a and the second supporting door plate 142b may be slidably connected to the principal shaft 141.

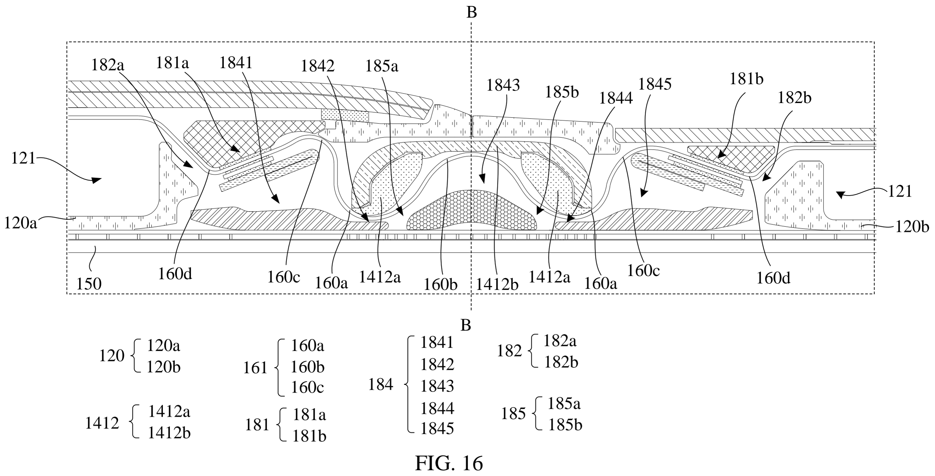

In some embodiments, the foldable electronic device 100 may include a plurality of electronic components. Both the first middle frame 120a and the second middle frame 120b may have an accommodating cavity 121 (FIG. 16), and the plurality of electronic components may be accommodated in the accommodating cavities 121 of the first middle frame 120a and the second middle frame 120b respectively. For example, the electronic components may include but are not limited to the circuit board 192 (FIG. 5), the battery 191 (FIG. 5), a processor, a memory, a camera module, a sensor module, an audio module, a fingerprint module, a wireless communication module, a mobile communication module, a motor module, and the like. An electronic component located in the accommodating cavity 121 of the first middle frame 120a may be a first electronic component, and an electronic component located in the accommodating cavity 121 of the second middle frame 120b may be a second electronic component.

The following describes a flexible circuit board 160 provided in embodiments of this application.

In some embodiments, the foldable electronic device 100 may include an electrical connector, and the electrical connector may extend from the first middle frame 120a to the second middle frame 120b. The electrical connector may be configured to electrically connect the first electronic component and the second electronic component, so that the electronic components of the different middle frames 120 can be electrically connected. A quantity of electrical connectors may be one or more. For example, the electrical connector may include the flexible circuit board 160, a coaxial cable, and the like. In this embodiment of this application, an example in which the electrical connector is the flexible circuit board 160 is used for description.

For example, the flexible circuit board 160 may be flexible to some extent, and may be bent and deformed with a relative rotation process of the two middle frames 120. When the foldable electronic device 100 is in different states such as the unfolded state, the folded state, or the intermediate state, the flexible circuit board 160 may be bent and deformed to continue maintaining the electrical connection between the two adjacent middle frames 120. In the folding or unfolding process of the foldable electronic device 100, a spacing between two ends of the flexible circuit board 160 changes in a direction from the first middle frame 120a to the second middle frame 120b. For example, when the foldable electronic device 100 is in the unfolded state, the flexible circuit board 160 may have a reserved redundant length, so as to adapt to a spacing between the electronic components in the two middle frames 120 in the folding process of the foldable electronic device 100. Because the flexible circuit board 160 has the redundant length, the flexible circuit board 160 is in a bent state in an area between the two middle frames 120, so that the flexible circuit board 160 can be accommodated between the two middle frames 120. As shown in FIG. 15 and FIG. 16, when the foldable electronic device 100 is in the unfolded state, the flexible circuit board 160 is in the bent state. As shown in FIG. 18, when the foldable electronic device 100 is in the folded state, the flexible circuit board 160 is in a stretched state.

For example, as shown in FIG. 7 and FIG. 10, the supports 143 may be located at two ends of the extension direction of the principal shaft 141, and other rotatable structural members such as the support 143, the swing member 145, and the linkage member 144 may not be disposed in a part of a middle region between the two ends of the principal shaft 141, so that interference caused by the other rotatable structural members to the flexible circuit board 160 during rotation can be avoided, and wiring spaces 184 can be formed in the part of the middle region of the rotating shaft assembly 140. The other rotatable structural members and the wiring spaces 184 (FIG. 16) are arranged in a staggered manner in the extension direction of the principal shaft 141. This helps enlarge the wiring spaces 184, so as to provide a large space for wiring and deformation of the flexible circuit board 160, and helps increase a bending radius of the flexible circuit board 160 in a bent state, so as to reduce bending stress of the flexible circuit board 160. The wiring space 184 may be located in a middle region of the extension direction of the rotating shaft assembly 140, or may be located in another position of the rotating shaft assembly 140. For example, the wiring space 184 may be located at an end of the extension direction of the rotating shaft assembly 140.

For example, as shown in FIG. 15 and FIG. 16, the wiring spaces 184 may include a first wiring space 1841, a second wiring space 1842, a third wiring space 1843, a fourth wiring space 1844, and a fifth wiring space 1845 that are sequentially arranged in the direction from the first middle frame 120a to the second middle frame 120b and communicated with each other. The first wiring space 1841 may be located between the first connection member 130a and the first supporting door plate 142a, the second wiring space 1842 may be located between the principal outer shaft 1412 and the first supporting door plate 142a, the third wiring space 1843 may be located between the principal outer shaft 1412 and the principal inner shaft 1411, the fourth wiring space 1844 may be located between the principal outer shaft 1412 and the second supporting door plate 142b, and the fifth wiring space 1845 may be located between the second connection member 130b and the second supporting door plate 142b. The flexible circuit board 160 may penetrate through the wiring spaces 184 of the rotating shaft assembly 140 connected between the two middle frames 120, and extend into the accommodating cavities 121 of the two middle frames 120 through the wiring spaces 184, so as to be electrically connected to the first electronic component and the second electronic component. The third wiring space 1843 is formed between the principal outer shaft 1412 and the principal inner shaft 1411, and via holes 185 are formed on both sides of the principal inner shaft 1411 and the principal outer shaft 1412. The two via holes 185 may include a first via hole 185a and a second via hole 185b. The second wiring space 1842 and the third wiring space 1843 may be communicated through the first via hole 185a, and the fourth wiring space 1844 and the third wiring space 1843 may be communicated through the second via hole 185b. As shown in FIG. 16 and FIG. 18, both the two via holes 185 may be located on a side that is of the principal shaft 141 and that is close to the flexible display 150, so that when the foldable electronic device 100 is in the folded state, the flexible circuit board 160 located in the third wiring space 1843 is disposed close to the principal inner shaft 1411. This helps decrease a total length of the flexible circuit board 160 in the stretched state, so as to help decrease the redundant length of the flexible circuit board 160 in the bent state, and helps increase the bending radius of the flexible circuit board 160 in the bent state, so as to reduce the bending stress of the flexible circuit board 160.

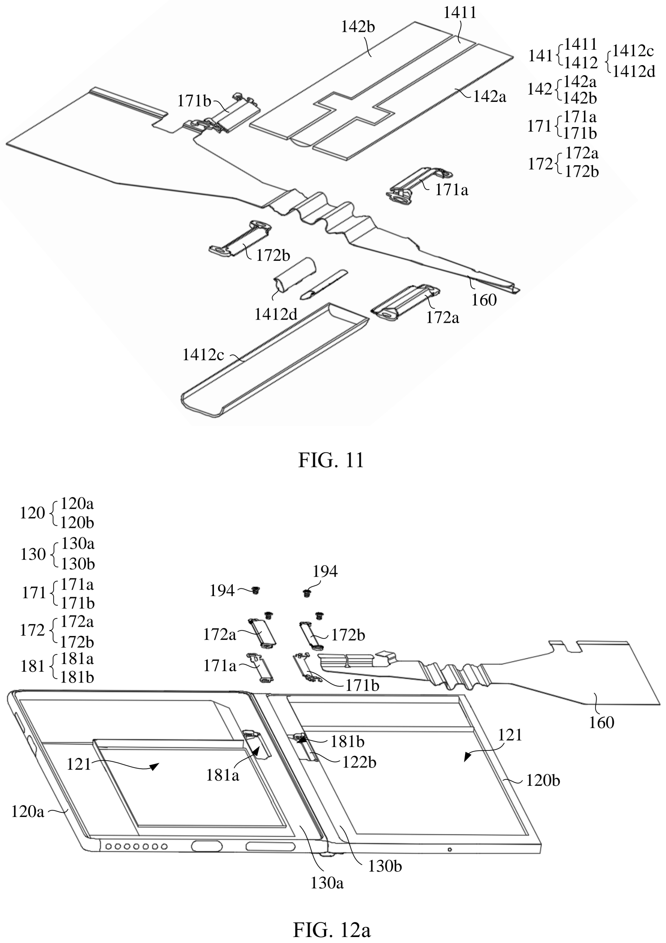

As shown in FIG. 12a, FIG. 15, and FIG. 16, an outer surface of a side that is of each middle frame 120 and that faces the principal shaft 141 may have a mating surface 122, a through hole 181 may be provided between the connection member 130 and the corresponding mating surface 122, and the through hole 181 is communicated with the corresponding accommodating cavity 121. The mating surfaces 122 may include a first mating surface 122a and a second mating surface 122b that are located on the two sides of the principal shaft 141. The first mating surface 122a is disposed on a side that is of the first middle frame 120a and that faces the principal shaft 141, and the second mating surface 122b is disposed on a side that is of the second middle frame 120b and that faces the principal shaft 141. The through holes 181 may include a first through hole 181a and a second through hole 181b that are located on the two sides of the principal shaft 141. The first through hole 181a is formed between the first connection member 130a and the first mating surface 122a, and the second through hole 181b is formed between the second connection member 130b and the second mating surface 122b. The accommodating cavity 121 of the first middle frame 120a and the first wiring space 1841 may be communicated through the first through hole 181a, and one end of the flexible circuit board 160 enters the accommodating cavity 121 of the first middle frame 120a from the first wiring space 1841 and the first through hole 181a. The accommodating cavity 121 of the second middle frame 120b and the fifth wiring space 1845 may be communicated through the second through hole 181b, and the other end of the flexible circuit board 160 enters the accommodating cavity 121 of the second middle frame 120b from the fifth wiring space 1845 and the second through hole 181b.

For example, as shown in FIG. 19, on a same side of the principal shaft 141, the mating surface 122 may include a first mating end 1221 close to the flexible display 150 and a second mating end 1222 far away from the flexible display 150. The first mating end 1221 is disposed in an inclined manner in a direction close to the principal shaft 141, so that another structural member can be easily mounted on the mating surface 122, and a thickness of a frame side wall of the middle frame 120 corresponding to the mating surface 122 can be improved, so that structural strength of the frame side wall can be improved.

As shown in FIG. 15 and FIG. 16, the flexible circuit board 160 may include two fastening parts 163 and a first extension section 161 located between the two fastening parts 163. The two fastening parts 163 may include a first fastening part 1631 and a second fastening part 1632. The first fastening part 1631 is connected to the first middle frame 120a, and the second fastening part 1632 is connected to the second middle frame 120b. The two fastening parts 163 are connected to the first middle frame 120a and the second middle frame 120b respectively. In the folding process of the foldable electronic device 100, it can be avoided that pulling between the flexible circuit board 160 and the connected electronic component occurs and thereby affects stability of the connection between the flexible circuit board 160 and the electronic component. The first extension section 161 is not connected to another structural member and is in a movable state. The first extension section 161 may be disposed in the wiring spaces 184 in a penetrating manner. In a process of relative rotation between the first middle frame 120a and the second middle frame 120b, the first extension section 161 may be bent and deformed in the wiring spaces 184. When the foldable electronic device 100 is in the unfolded state, the first extension section 161 has a redundant length. In this case, a distance between the two fastening parts 163 in a direction from the middle frame 120 to the principal shaft 141 is less than an extension length of the first extension section 161. The flexible circuit board 160 may include two second extension sections 162, and one second extension section 162 may be correspondingly located on a side that is of one fastening part 163 and that is far away from the first extension section 161. One second extension section 162 may be located on a side that is of the first fastening part 1631 and that is far away from the first extension section 161, and enters the accommodating cavity 121 of the first middle frame 120a through the first through hole 181a. The other second extension section 162 may be located on a side that is of the second fastening part 1632 and that is far away from the first extension section 161, and enters the accommodating cavity 121 of the second middle frame 120b through the second through hole 181b.

In some embodiments, as shown in FIG. 11, FIG. 12a, and FIG. 13b, each middle frame 120 may be connected to a mounting member 171, and one fastening part 163 is correspondingly connected to one middle frame 120 through one mounting member 171. The mounting member 171 may be directly connected to the middle frame 120, or the mounting member 171 may be indirectly connected to the middle frame 120 through another structural member (for example, the connection member 130). The mounting members 171 may include a first mounting member 171a and a second mounting member 171b that are located on the two sides of the principal shaft 141. The first mounting member 171a may be connected to the first connection member 130a and connected to the first middle frame 120a through the first connection member 130a, and the second mounting member 171b may be connected to the second connection member 130b and connected to the second middle frame 120b through the second connection member 130b. For example, the mounting member 171 may be located between the middle frame 120 and the principal shaft 141.

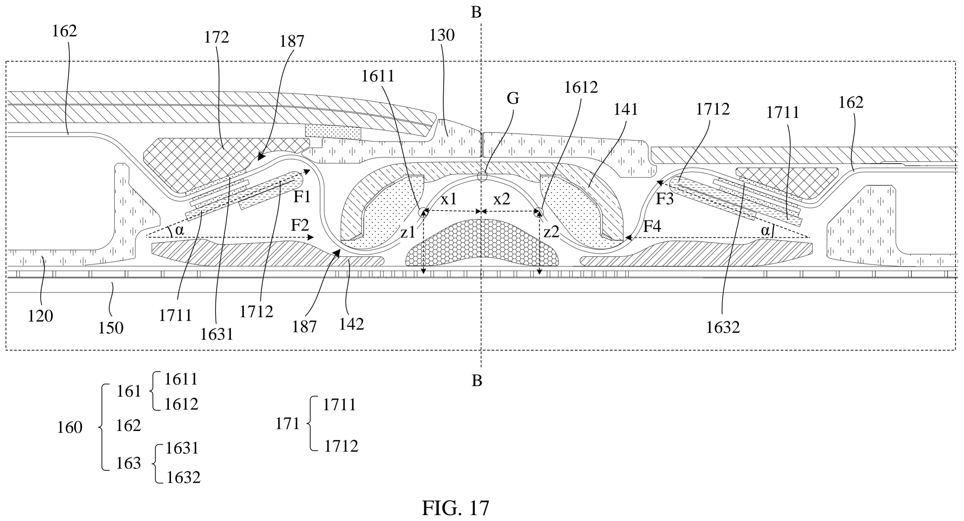

As shown in FIG. 17, on a same side of the principal shaft 141, the mounting member 171 may include a first end 1711 and a second end 1712, and the first end 1711 and the second end 1712 may be two opposite ends of the mounting member 171. When the foldable electronic device 100 is in the unfolded state, in a thickness direction of the flexible display 150, a distance between the first end 1711 and the flexible display 150 may be less than or equal to a distance between the second end 1712 and the flexible display 150, and in a direction parallel to the flexible display 150, a distance between the first end 1711 and the principal shaft 141 may be greater than a distance between the second end 1712 and the principal shaft 141, or a direction from the first end 1711 to the second end 1712 may be perpendicular to the flexible display 150. A direction from the first end 1711 to the second end 1712 of the first mounting member 171a is a direction F1, a direction from the first middle frame 120a to the principal shaft 141 is a direction F2, and an included angle α between the direction F1 and the direction F2 may range from 0 degrees to 90 degrees. A direction from the first end 1711 to the second end 1712 of the second mounting member 171b is a direction F3, a direction from the second middle frame 120b to the principal shaft 141 is a direction F4, and an included angle α between the direction F3 and the direction F4 may range from 0 degrees to 90 degrees. For example, the included angle α may be 0 degrees, 10 degrees, 30 degrees, 45 degrees, 60 degrees, 75 degrees, 90 degrees, or any value between 0 degrees and 90 degrees.

The following describes each bent section when the flexible circuit board 160 in this embodiment of this application is in the bent state.

As shown in FIG. 17, the mounting members 171 are disposed to fasten the flexible circuit board 160. The mounting member 171 may include the first end 1711 and the second end 1712. When the foldable electronic device 100 is in the unfolded state, in the thickness direction of the flexible display 150, the distance between the first end 1711 and the flexible display 150 may be less than or equal to the distance between the second end 1712 and the flexible display 150, and in the direction parallel to the flexible display 150, the distance between the first end 1711 and the principal shaft 141 may be greater than the distance between the second end 1712 and the principal shaft 141, or the direction from the first end 1711 to the second end 1712 may be perpendicular to the flexible display 150. FIG. 17 shows that in the thickness direction of the flexible display 150, the distance between the first end 1711 and the flexible display 150 is less than the distance between the second end 1712 and the flexible display 150, and in the direction parallel to the flexible display 150, the distance between the first end 1711 and the principal shaft 141 is greater than the distance between the second end 1712 and the principal shaft 141. In an implementation (not shown in FIG. 17) in which the distance between the first end 1711 and the flexible display 150 is equal to the distance between the second end 1712 and the flexible display 150, the mounting member 171 may be parallel to the flexible display 150, and the direction from the first end 1711 to the second end 1712 is parallel to the direction from the first middle frame 120a to the second middle frame 120b. In an implementation (not shown in FIG. 17) in which the direction from the first end 1711 to the second end 1712 is perpendicular to the flexible display 150, the thickness direction of the mounting member 171 is parallel to the direction from the first middle frame 120a to the second middle frame 120b. In this way, as shown in FIG. 16 and FIG. 17, when the flexible circuit board 160 is fastened to the mounting members 171, a part of the second extension section 162 and the fastening part 163 that are between the middle frame 120 and the second end of the mounting member 171 may form a fourth bent section 160d, and the fourth bent section 160d is fastened by using the mounting member 171, so that the fourth bent section 160d is in a fastened state and cannot be deformed. Therefore, a quantity of movable-state bent sections between the two middle frames 120 is reduced, and the total quantity of the bent sections of the movable-state first extension section 161 between the two middle frames 120 is small, so that controllability of a bending form of each movable-state bent section of the first extension section 161 in the folding or unfolding process of the foldable electronic device 100 is improved, and the first extension section 161 does not need to be fastened to the rotating shaft assembly 140. In addition, only the two fastening parts 163 of the flexible circuit board 160 are connected to the two mounting members 171 respectively, the first extension section 161 of the flexible circuit board 160 is not connected to another structural member, no connection structure for connection needs to be disposed, and a distance between the two mounting members 171 is long in the direction parallel to the flexible display 150, so that a space for the first extension section 161 to move in the foldable electronic device 100 is large, a form of each bent section of the first extension section 161 is gentle, and a bending angle is large, so that the first extension section 161 suffers small bending stress, and therefore a damage probability of the first extension section 161 can be reduced.

In some embodiments, as shown in FIG. 15 and FIG. 16, the principal outer shaft 1412 may include two first principal outer shaft parts 1412a and a second principal outer shaft part 1412b located between the two first principal outer shaft parts 1412a. The two first principal outer shaft parts 1412a may be located on a side that is of the second principal outer shaft part 1412b and that is close to the flexible display 150, and the first principal outer shaft part 1412a extends in a direction toward the flexible display 150. The principal outer shaft 1412 may be bent in a direction far away from the flexible display 150, so that the first extension section 161 located in the third wiring space 1843 may form a second bent section 160b, and the second bent section 160b may be bent in a direction far away from the flexible display 150. At least a part of the second bent section 160b may correspond to the second principal outer shaft part 1412b. One end of the first principal outer shaft part 1412a is connected to the second principal outer shaft part 1412b, the other end of the first principal outer shaft part 1412a extends in a direction close to the flexible display 150, and the other ends of the two first principal outer shaft parts 1412a are spaced from the two sides of the width direction of the principal inner shaft 1411 respectively, so that the two via holes 185 are formed in a side that is of the principal shaft 141 and that is close to the flexible display 150. In addition, the other ends of the two first principal outer shaft parts 1412a are spaced from the first supporting door plate 142a and the second supporting door plate 142b to form the second wiring space 1842 and the fourth wiring space 1844 respectively, and both the second wiring space 1842 and the fourth wiring space 1844 are disposed close to the flexible display 150, so that the first extension section 161 forms the first bent section 160a at the first via hole 185a and the second wiring space 1842, and the first extension section 161 also forms the first bent section 160a at the second via hole 185b and the fourth wiring space 1844. The first bent sections 160a may be in a one-to-one correspondence with the first principal outer shaft parts 1412a, the two first bent sections 160a may be located on two sides of the second bent section 160b respectively, and the first bent section 160a is bent in a direction close to the flexible display 150. The first extension section 161 forms a third bent section 160c in a position corresponding to the second end 1712 of the mounting member 171. The third bent sections 160c are in a one-to-one correspondence with the second ends 1712 of the mounting members 171, and the third bent section 160c is bent in a direction far away from the flexible display 150. One third bent section 160c may be located on a side that is of one first bent section 160a and that is far away from the second bent section 160b. Equivalently, the first extension section 161 may include the third bent section 160c, the first bent section 160a, the second bent section 160b, the first bent section 160a, and the third bent section 160c that are sequentially connected.

The first principal outer shaft parts 1412a may help form the first bent sections 160a, the second principal outer shaft part 1412b helps form the second bent section 160b, and the mounting members 171 help form the third bent sections 160c. Through cooperation between the principal shaft 141 and the mounting members 171, the bending form of each bent section of the first extension section 161 in a free state is stable, so that the bending form of each bent section of the first extension section 161 can be better controlled.

In some embodiments, as shown in FIG. 7 and FIG. 15, the principal shaft 141 corresponding to the first extension section 161 may have a center line DD, the center line DD extends in the extension direction of the principal shaft 141, and a line BB in FIG. 15 passes through the center line DD and is perpendicular to the flexible display 150. The first mounting member 171a and the second mounting member 171b may be symmetrically disposed on two sides of the center line DD. In the folding or unfolding process of the foldable electronic device 100, the first mounting member 171a and the second mounting member 171b exert consistent forces on the first extension section 161. This helps improve consistency of bending deformations of the first extension section 161 on the two sides of the center line DD, so that bending deformations generated by the first extension section 161 on the two sides of the center line DD are consistent. This helps control the bending form of the first extension section 161 and reduce an offset of the first extension section 161 relative to a preset region. The preset region is a pre-designed activity region of the first extension section 161.

For example, as shown in FIG. 7 and FIG. 15, both the principal inner shaft 1411 and the principal outer shaft 1412 that correspond to the first extension section 161 may be symmetrically disposed along the center line DD, so that the first via hole 185a and the second via hole 185b may be symmetrically disposed on the two sides of the center line DD. In the folding or unfolding process of the foldable electronic device 100, the principal inner shaft 1411 and the principal outer shaft 1412 exert consistent forces on the first extension section 161 on the two sides of the center line DD. This helps improve consistency of the bending deformations of the first extension section 161 on the two sides of the center line DD, so that the bending deformations of the first extension section 161 on the two sides of the center line DD are consistent. This helps control the bending form of the first extension section 161 and reduce the offset of the first extension section 161 relative to the preset region.

For example, as shown in FIG. 7 and FIG. 15, the first supporting door plate 142a and the second supporting door plate 142b that correspond to the first extension section 161 may be symmetrically disposed on the two sides of the center line DD, so that the second wiring space 1842 and the fourth wiring space 1844 may be symmetrically disposed on the two sides of the center line DD. In the folding or unfolding process of the foldable electronic device 100, the first supporting door plate 142a and the second supporting door plate 142b exert consistent forces on the first extension section 161 on the two sides of the center line DD. This helps improve consistency of the bending deformations of the first extension section 161 on the two sides of the center line DD, so that the bending deformations of the first extension section 161 on the two sides of the center line DD are consistent. This helps control the bending form of the first extension section 161 and reduce the offset of the first extension section 161 relative to the preset region.

For example, as shown in FIG. 15 and FIG. 16, the principal outer shaft 1412 may include shaft bodies 1412c and protection members 1412d, and the protection member 1412d may be located on a side that is of the shaft body 1412c and that faces the flexible display 150. The protection members 1412d may cover at least the shaft bodies 1412c of the two first principal outer shaft parts 1412a. The protection member 1412d can avoid that an end that is of the shaft body 1412c of the first principal outer shaft part 1412a and that is close to the flexible display 150 contacts the first extension section 161, so that it can be avoided that the first extension section 161 is damaged by the end of the shaft body 1412c of the first principal outer shaft part 1412a. A surface that is of the protection member 1412d and that is far away from the shaft body 1412c may be a curved surface, so that a contact area between the protection member 1412d and the first extension section 161 can be increased. This helps reduce an action force exerted by the protection member 1412d on the first extension section 161. In addition, this helps increase a bending radius of the first bent section 160a and reduce bending stress of the first bent section 160a. For example, the protection members 1412d may be symmetrically disposed along the center line DD (FIG. 7).

In a related technology, as shown in FIG. 1, the first movable section 14a is of an asymmetric structure, and the plurality of bent sections formed by the first movable section 14a are asymmetrically disposed, so that in the folding or unfolding process of the foldable electronic device, controllability of bending deformations generated in each position of the first movable section 14a in the movable state and an offset relative to a preset region is low, so that a bending form of each bent section of the first movable section 14a and the offset relative to the preset region are unstable. The first movable section 14a cannot move in the preset region in the folding or unfolding process. A deformation of the first movable section 14a and an offset relative to the preset region are sometimes large and sometimes small. When the deformation of the first movable section 14a and/or the offset relative to the preset region are large, the first movable section 14a generates a large action force on a door plate 15, and is prone to causing a crease light shadow of the flexible display screen 13 and affecting display effect of the flexible display screen. In addition, the first movable section 14a generates a large action force on the principal shaft structure 12, and is prone to causing severe friction or scratching between the first movable section and the principal shaft structure 12 and prone to wear and breakage of the first movable section 14a. The second movable section 14b is similar to the first movable section 14a, and details are not described again.

As shown in FIG. 7 and FIG. 15, in this embodiment of this application, the two mounting members 171, the two supporting door plates 142, the principal inner shaft 1411, and the principal outer shaft 1412 are all symmetrically disposed on the two sides of the center line DD, so that the first extension section 161 in the movable state is approximately in a symmetrical state along the center line DD. In the folding or unfolding process of the foldable electronic device 100, because the first extension section 161 may be approximately in the symmetrical state along the center line DD, controllability of the bending deformations generated in each position of the first extension section 161 in the movable state and the offset relative to the preset region is high, so that the bending form of each bent section of the first extension section 161 and the offset relative to the preset region are unstable. In a process in which the first middle frame 120a and the second middle frame 120b rotate relative to each other, the first extension section 161 can move in the preset region when being bent and deformed, so that the offset in each position of the first extension section 161 relative to the preset region can be controlled to be small, and an action force of each bent section of the first extension section 161 on the supporting door plate 142 and the principal outer shaft 1412 is controlled to be small, so that a deformation of the supporting door plate 142 is small, a crease light shadow of the flexible display 150 is alleviated, so as to improve display effect of the flexible display 150. In addition, an action force of the principal outer shaft 1412 on the first extension section 161 is also small, so that a phenomenon of friction or scratching of the principal outer shaft 1412 on the first extension section 161 is alleviated, and a case in which the first extension section 161 is worn and broken is alleviated.

For example, as shown in FIG. 7 and FIG. 17, the first extension section 161 located on one side of the center line DD may include a plurality of first extension subsections 1611, the first extension section 161 located on the other side of the center line DD may include a plurality of second extension subsections 1612, and the first extension subsection 1611 and the second extension subsection 1612 may be in a one-to-one correspondence. In the direction parallel to the flexible display 150, a distance between the first extension subsection 1611 and the center line DD (that is, a distance x1 between the first extension subsection 1611 and the line BB) is equal to a distance between the corresponding second extension subsection 1612 and the center line DD (that is, a distance x2 between the second extension subsection 1612 and the line BB), and in the thickness direction of the flexible display 150, a ratio of a distance z1 between the first extension subsection 1611 and the flexible display 150 to a distance z2 between the corresponding second extension subsection 1612 and the flexible display 150 may range from 0.5 to 2, so that the distances z1 and z2 from the first extension subsection 1611 and the corresponding second extension subsection 1612 to the flexible display 150 are close, a part of the first extension section 161 including the plurality of first extension subsections 1611 and another part of the first extension section 161 including the plurality of second extension subsections 1612 may be approximately symmetrical on the two sides of the center line DD, the crease light shadow of the flexible display 150 can be alleviated, the display effect of the flexible display 150 can be improved, and a case in which the first bent section 160a is worn and broken can be further alleviated. For example, in the thickness direction of the flexible display 150, the ratio (z1/z2) of the distance z2 between the first extension subsection 1611 and the flexible display 150 to the distance z2 between the corresponding second extension subsection 1612 and the flexible display 150 may be 0.5, 0.8, 1, 1.2, 1.5, 1.8, 2, or any value between 0.5 and 2. When the distance z1 between the first extension subsection 1611 and the flexible display 150 is equal to the distance z2 between the corresponding second extension subsection 1612 and the flexible display 150, the ratio of z1/z2 is 1, and the first extension section 161 is symmetrically disposed along the center line DD, so that the crease light shadow of the flexible display 150 can be better alleviated, the display effect of the flexible display 150 can be better improved, and the case in which the first bent section 160a is worn and broken can be further better alleviated.

For example, as shown in FIG. 16 and FIG. 17, the second bent section 160b may include a top G, and in the thickness direction of the flexible display 150, a distance between the top G and the flexible display 150 may be greater than a distance between a remaining part of the second bent section 160b and the flexible display 150. In a direction from the middle frame 120 to the principal shaft 141, a ratio of the distance between the top G and the center line DD (that is, a distance between the top G and the line BB in FIG. 17) to a width of the principal shaft 141 may be less than or equal to 0.5. In this way, an offset between the top of the second bent section 160b and the center line DD is small. For example, the first extension section 161 between the top and the first fastening part 1631 and the first extension section 161 between the top and the second fastening part 1632 may be approximately symmetrically disposed. Because the offset between the top of the second bent section 160b and the center line DD is small, the first extension section 161 may be approximately symmetrically disposed along the center line DD, so that the crease light shadow of the flexible display 150 can be alleviated, the display effect of the flexible display 150 can be improved, and the case in which the first bent section 160a is worn and broken can be further alleviated. For example, in the direction from the middle frame 120 to the principal shaft 141, the ratio of the distance between the top G and the center line DD to the width of the principal shaft 141 may be 0, 0.05, 0.1, 0.15, 0.2, 0.25, 0.3, 0.4, 0.5, or any value less than 0.5.

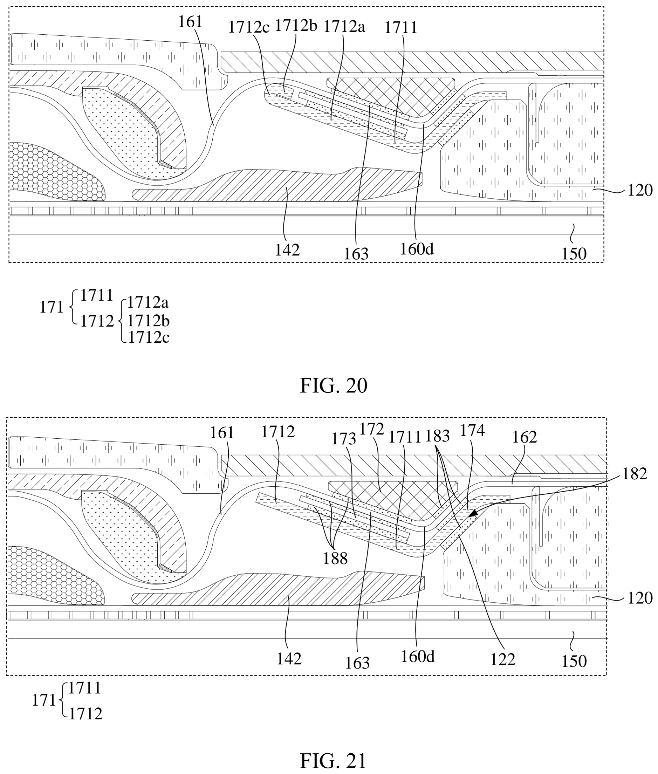

For example, as shown in FIG. 19 and FIG. 20, in one mounting member 171, the second end 1712 of the mounting member 171 may include a first mounting part 1712a, a bent part 1712c, and a second mounting part 1712b that are sequentially connected. The first mounting part 1712a may be connected to the first end 1711 of the mounting member 171, and the second mounting part 1712b may be located on a side of a thickness direction of the first mounting part 1712a. That is, the mounting member 171 may include the first end 1711, the first mounting part 1712a, the bent part 1712c, and the second mounting part 1712b that are sequentially connected. The second mounting part 1712b is disposed on the mounting member 171, so that a thickness of the second end 1712 of the mounting member 171 is large, and structural strength of the mounting member 171 can be improved. As shown in FIG. 19, the second mounting part 1712b may be located on a side that is of the first mounting part 1712a and that is far away from the fastening part 163, or as shown in FIG. 20, the second mounting part 1712b may be located on a side that is of the first mounting part 1712a and that is close to the fastening part 163. The bent part 1712c is disposed, to avoid that the second end 1712 of the mounting member 171 is sharp and then cuts and damages the first extension section 161, so that the first extension section 161 is protected. For example, a surface of a side that is of the bent part 1712c and that is close to the first extension section 161 may be a curved surface, and therefore the bent part 1712c can exert a uniform action force on the first extension section 161, so that it can be avoided that the bent part 1712c causes concentrated stress to the first extension section 161 and therefore damages the first extension section 161. Certainly, in some other examples, as shown in FIG. 21, the bent part 1712c and the second mounting part 1712b may not be disposed at the second end 1712 of the mounting member 171, so that a structure of the mounting member 171 can be simplified.

In some embodiments, as shown in FIG. 12a, FIG. 13a, and FIG. 15, each middle frame 120 may be connected to a clamping member 172. On a same side of the center line DD (FIG. 7) (that is, a same side of the line BB in FIG. 15), the clamping member 172 may be located between the middle frame 120 and the principal shaft 141, and the mounting member 171 may be located on a side that is of the fastening part 163 and that is close to the flexible display 150, the clamping member 172 may be located on a side that is of the fastening part 163 and that is far away from the flexible display 150, and the fastening part 163 is clamped between the mounting member 171 and the clamping member 172. For example, the clamping members 172 may include a first clamping member 172a and a second clamping member 172b that are located on the two sides of the principal shaft 141. The first fastening part 1631 is fastened between the first clamping member 172a and the first mounting member 171a, and the second fastening part 1632 is fastened between the second clamping member 172b and the second mounting member 171b. On a same side of the center line DD (FIG. 7), the fastening part 163 is connected to the middle frame 120 through the clamping member 172 and the mounting member 171, so that stability of the connection between the fastening part 163 and the corresponding middle frame 120 can be improved. At least one of the mounting member 171 and the clamping member 172 may be connected to the corresponding connection member 130 in a manner of bonding, welding, clamping, thread connection, or the like, so as to be connected to the middle frame 120.

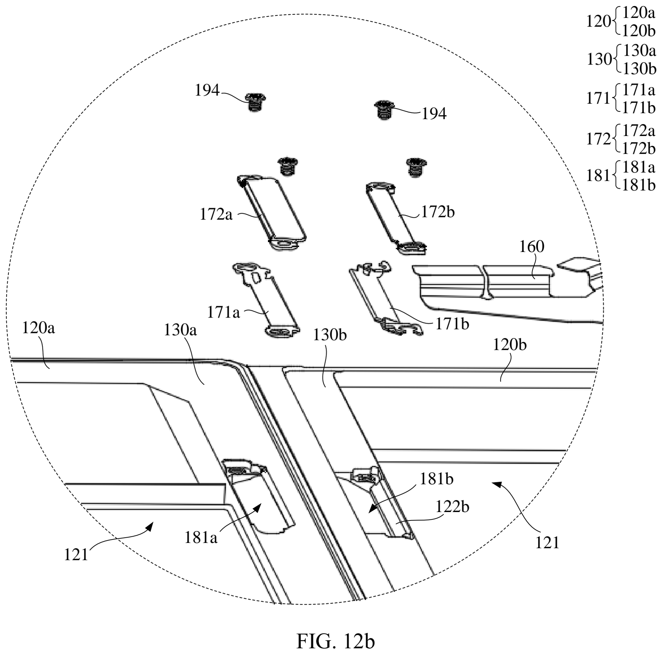

For example, as shown in FIG. 12b, FIG. 15, and FIG. 16, on a same side of the center line DD (FIG. 7), the clamping member 172 may cover a part of the through hole 181, a gap 182 may be provided between the clamping member 172 and the mating surface 122, and the second extension section 162 penetrates through the gap 182 and extends to the accommodating cavity 121. For example, the first clamping member 172a may cover the first through hole 181a, and a first gap 182a is formed between the first mating surface 122a and the first clamping member 172a. The second clamping member 172b may cover the second through hole 181b, and a second gap 182b is formed between the second mating surface 122b and the second clamping member 172b. The two second extension sections 162 are disposed in the first gap 182a and the second gap 182b in a penetrating manner respectively.

For example, as shown in FIG. 21, on a same side of the center line DD (FIG. 7), a reinforcement member 173 may be disposed between the mounting member 171 and the corresponding clamping member 172, and the reinforcement member 173 may be located on at least one side of a thickness direction of the fastening part 163. The reinforcement member 173 is disposed, so that structural strength of the fastening part 163 can be improved, the fastening part 163 can be protected, and mounting difficulty of the fastening part 163 can be reduced. The reinforcement member 173 may be located between the mounting member 171 and the fastening part 163, and/or the reinforcement member 173 may be located between the clamping member 172 and the fastening part 163. On a same side of the center line DD (FIG. 7), for example, the reinforcement member 173 is located between the mounting member 171 and the fastening part 163. Bonding members 188 may be disposed between the reinforcement member 173 and the mounting member 171, between the reinforcement member 173 and the fastening part 163, and between the fastening part 163 and the clamping member 172 respectively, so that assembly difficulty can be reduced. The reinforcement member 173 may be located on at least one of the first fastening part 1631 and the second fastening part 1632.

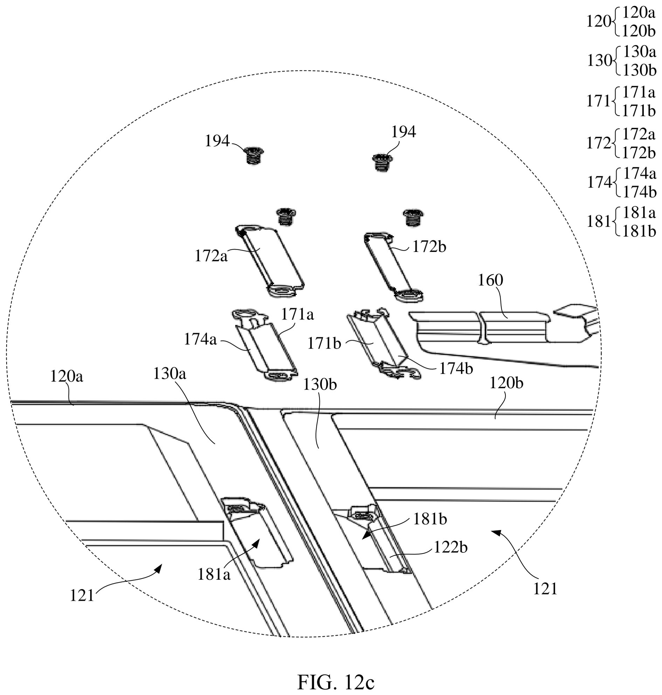

In some embodiments, as shown in FIG. 12c, FIG. 14, and FIG. 21, an auxiliary mounting member 174 may be disposed at the first end 1711 of each mounting member 171. On a same side of the center line DD (FIG. 7), the auxiliary mounting member 174 may be located between the second extension section 162 and the mating surface 122, and a part of the clamping member 172 may be located on a side that is of the second extension section 162 and that is far away from the auxiliary mounting member 174. For example, as shown in FIG. 15 and FIG. 19, the auxiliary mounting members 174 may include a first auxiliary mounting member 174a and a second auxiliary mounting member 174b that are located on the two sides of the principal shaft 141, where the first auxiliary mounting member 174a may be located between the first mating surface 122a and one second extension section 162, and the second auxiliary mounting member 174b may be located between the second mating surface 122b and the other second extension section 162. Because the first mating end 1221 of the mating surface 122 is disposed in an inclined manner in a direction close to the principal shaft 141, the mating surface 122 and the corresponding auxiliary mounting member 174 may be mounted conveniently. An extension direction of the auxiliary mounting member 174 may be the same as an extension direction of the mating surface 122. In this case, the extension direction of the auxiliary mounting member 174 is different from an extension direction of the corresponding mounting member 171 (for example, an entire structural member formed by the auxiliary mounting member 174 and the corresponding mounting member 171 may be in a "V" shape).

For example, an end that is of the first auxiliary mounting member 174a and that is far away from the first mounting member 171a and/or an end that is of the second auxiliary mounting member 174b and that is far away from the second mounting member 171b may be bent in a direction close to the corresponding second extension section 162, to avoid that the end that is of the auxiliary mounting member 174 and that is far away from the corresponding mounting member 171 is sharp and then cuts and damages the second extension section 162, so that the second extension section 162 can be protected.

In some embodiments, as shown in FIG. 15 and FIG. 18, the first connection member 130a may rotate relative to the principal shaft 141 under driving of the first middle frame 120a, a gap E may be provided between the first connection member 130a and the principal shaft 141, the second connection member 130b may rotate relative to the principal shaft 141 under driving of the second middle frame 120b, and a gap E may also be provided between the second connection member 130b and the principal shaft 141. External water, dust, and the like easily enter the wiring spaces 184 through the gaps E between the connection members 130 and the principal shaft 141, then enter the accommodating cavity 121 of the first middle frame 120a through the first gap 182a between the first clamping member 172a and the first mating surface 122a, and enter the accommodating cavity 121 of the second middle frame 120b through the second gap 182b between the second clamping member 172b and the second mating surface 122b. Consequently, the electronic components in the accommodating cavities 121 fail.

For example, as shown in FIG. 21, on a same side of the center line DD (FIG. 7), a sealing member 183 may be disposed between the clamping member 172 and the corresponding mating surface 122. The sealing member 183 is disposed in at least one of the following positions: between the auxiliary mounting member 174 and the corresponding mating surface 122, between the auxiliary mounting member 174 and the corresponding second extension section 162, and between the clamping member 172 and the corresponding second extension section 162. Therefore, external water, dust, and the like can be prevented from entering the accommodating cavity 121 of the corresponding middle frame 120a through the gap 182 between the clamping member 172 and the corresponding mating surface 122, so that waterproof and dustproof performance of the foldable electronic device 100 can be improved, and working stability of the foldable electronic device 100 can be improved. The sealing member 183 may be disposed in at least one of the following positions: between the first clamping member 172a and the first mating surface 122a, and between the second clamping member 172b and the second mating surface 122b. For example, the sealing member 183 may be made of a bonding material, so that an assembly process of the sealing member 183 can be simplified. In addition, hardness of the sealing member 183 may be less than hardness of the auxiliary mounting member 174 and/or the clamping member 172, so that close bonding between the sealing member 183 and another structural member attached to the sealing member 183 can be facilitated, and waterproof and dustproof performance of the foldable electronic device 100 can be improved.

In a process of assembling the clamping member 172 and the corresponding mounting member 171, on a same side of the principal shaft 141, the auxiliary mounting member 174 may be first bonded to the mating surface 122 through the sealing member 183 (for example, the sealing member 183 may be made of the bonding material), the sealing members 183 are disposed between the auxiliary mounting member 174 and the flexible circuit board 160 and between the flexible circuit board 160 and the clamping member 172, and the clamping member 172 presses the sealing member 183 to tightly clamp the flexible circuit board 160, so that waterproofing, dustproofing, and the like can be effectively implemented. In addition, the mounting member 171 is located at one end of the auxiliary mounting member 174, the reinforcement member 173 is connected to a side that is of the fastening part 163 and that faces the flexible display 150 through the bonding member 188, then the reinforcement member 173 is bonded to the mounting member 171 through the bonding member 188, the bonding member 188 is disposed between the clamping member 172 and the fastening part 163, and the clamping member 172 presses the bonding member 188 to effectively fasten the fastening part 163. For example, two ends of an extension direction of the clamping member 172 may be fastened to the connection members 130 through fasteners 194, two ends of an extension direction of the mounting member 171 may be fastened to the connection members 130 through fasteners 194, and same ends of the clamping member 172 and the corresponding mounting member 171 may be fastened to the connection member 130 through the same fastener 194, so that an assembly process of the clamping member 172 and the corresponding mounting member 171 can be simplified. For example, the fastener 194 may include a screw.

In some embodiments, as shown in FIG. 16 and FIG. 17, an avoidance groove 187 may be provided in a side that is of the supporting door plate 142 and that is far away from the flexible display 150, and the avoidance groove 187 may be provided in an end that is of the supporting door plate 142 and that is close to the corresponding first bent section 160a, to form an avoidance space for the first bent section 160a, so that a form of the formed first bent section 160a is gentler, an action force on the first bent section 160a can be reduced, and the first bent section 160a can be protected; and/or, an avoidance groove 187 may be provided in a side that is of at least one of the clamping member 172 and the connection member 130 and that faces the flexible display 150, and the avoidance groove 187 is disposed close to the third bent section 160c, to form an avoidance space for the third bent section 160c, so that a form of the formed third bent section 160c is gentler, an action force on the third bent section 160c can be reduced, and the third bent section 160c can be protected.

In descriptions of embodiments of this application, it should be noted that, unless otherwise clearly specified and limited, the term "installation", "interconnection", or "connection" should be understood in a broad sense, for example, may be fastening, may be an indirect connection through an intermediate medium, or may be an internal connection between two elements or an interaction relationship between two elements. A person of ordinary skill in the art may understand specific meanings of the foregoing terms in embodiments of this application based on specific cases.

The terms such as "first", "second", "third", "fourth", and the like (if any) are intended to distinguish between similar objects but do not necessarily indicate a specific order or sequence.

Finally, it should be noted that the foregoing embodiments are merely used to describe the technical solutions in embodiments of this application, but not to limit the technical solutions. Although embodiments of this application are described in detail with reference to the foregoing embodiments, a person of ordinary skill in the art should understand that the technical solutions recorded in the foregoing embodiments may still be modified, or some or all of technical features thereof may be equivalently replaced. However, these modifications or replacements do not depart from the scope of the technical solutions in embodiments of this application.

## Claims

1. A foldable electronic device, comprising: two middle frames (120), a rotating shaft assembly (140), a flexible circuit board (160), and a flexible display (150), wherein the two middle frames (120) are rotatably connected to two sides of the rotating shaft assembly (140) respectively, and the flexible display (150) is laid on a same side of a thickness direction of the two middle frames (120) and the rotating shaft assembly (140);
the rotating shaft assembly (140) comprises a principal shaft (141), the flexible circuit board (160) comprises two fastening parts (163) and a first extension section (161) located between the two fastening parts (163), and the first extension section (161) is disposed in the principal shaft (141) in a penetrating manner; and
a mounting member (171) is connected to each middle frame (120), the fastening part (163) is connected to the mounting member (171), the mounting member (171) comprises a first end (1711) and a second end (1712), and when the foldable electronic device (100) is in an unfolded state, in a thickness direction of the flexible display (150), a distance between the first end (1711) and the flexible display (150) is less than or equal to a distance between the second end (1712) and the flexible display (150), and in a direction parallel to the flexible display (150), a distance between the first end (1711) and the principal shaft (141) is greater than a distance between the second end (1712) and the principal shaft (141), or a direction from the first end (1711) to the second end (1712) is perpendicular to the flexible display (150).

2. The foldable electronic device according to claim 1, wherein the principal shaft (141) corresponding to the first extension section (161) has a center line, the center line extends in an extension direction of the principal shaft (141), and the mounting members (171) of the two middle frames (120) are symmetrically disposed on two sides of the center line.

3. The foldable electronic device according to claim 2, wherein the rotating shaft assembly (140) comprises two supporting door plates (142), the principal shaft (141) comprises a principal inner shaft (1411) and a principal outer shaft (1412) that are connected, the principal outer shaft (1412) is located on a side that is of the principal inner shaft (1411) and that is far away from the flexible display (150), the two supporting door plates (142) are both movably connected to the principal shaft (141), and the two supporting door plates (142) are located on two sides of the principal inner shaft (1411) respectively, and are spaced from the principal outer shaft (1412) in the thickness direction of the flexible display (150);
the first extension section (161) is disposed in a penetrating manner between the principal inner shaft (1411) and the principal outer shaft (1412) and between the principal outer shaft (1412) and the supporting door plate (142); and
the principal inner shaft (1411), the principal outer shaft (1412), and the two supporting door plates (142) that correspond to the first extension section (161) are all symmetrically disposed along the center line.

4. The foldable electronic device according to claim 2 or 3, wherein the first extension section (161) located on one side of the center line comprises a plurality of first extension subsections (1611), and the first extension section (161) located on the other side of the center line comprises a plurality of second extension subsections (1612); and
the first extension subsections (1611) are in a one-to-one correspondence with the second extension subsections (1612), in the direction parallel to the flexible display (150), a distance between the first extension subsection (1611) and the center line is equal to a distance between the corresponding second extension subsection (1612) and the center line, and in the thickness direction of the flexible display (150), a ratio of a distance between the first extension subsection (1611) and the flexible display (150) to a distance between the corresponding second extension subsection (1612) and the flexible display (150) ranges from 0.5 to 2.

5. The foldable electronic device according to claim 4, wherein the first extension section (161) is symmetrically arranged along the center line.

6. The foldable electronic device according to claim 3, wherein the principal outer shaft (1412) comprises two first principal outer shaft parts (1412a) and a second principal outer shaft part (1412b) located between the two first principal outer shaft parts (1412a), and the two first principal outer shaft parts (1412a) are located on a side that is of the second principal outer shaft part (1412b) and that is close to the flexible display (150), and extend in a direction close to the flexible display (150); and
the first extension section (161) comprises two first bent sections (160a) and a second bent section (160b) located between the two first bent sections (160a), the first bent sections (160a) are in a one-to-one correspondence with the first principal outer shaft parts (1412a), and are bent in a direction close to the flexible display (150), and the second bent section (160b) corresponds to the second principal outer shaft part (1412b), and is bent in a direction away from the flexible display (150).

7. The foldable electronic device according to claim 6, wherein the first extension section (161) comprises two third bent sections (160c), and one third bent section (160c) is located on a side that is of one first bent section (160a) and that is far away from the second bent section (160b); and
the third bent sections (160c) are in a one-to-one correspondence with the second ends (1712) of the mounting members (171), and the third bent section (160c) is bent in a direction away from the flexible display (150).

8. The foldable electronic device according to any one of claims 1 to 3, wherein in one mounting member (171), the second end (1712) comprises a first mounting part (1712a), a bent part (1712c), and a second mounting part (1712b) that are sequentially connected, the first mounting part (1712a) is connected to the first end (1711), and the second mounting part (1712b) is located on a side of a thickness direction of the first mounting part (1712a).

9. The foldable electronic device according to claim 8, wherein a surface of a side that is of the bent part (1712c) and that is close to the flexible circuit board (160) is an arc surface.

10. The foldable electronic device according to any one of claims 1 to 3, wherein a clamping member (172) is connected to each middle frame (120), and on a same side of the principal shaft (141), the mounting member (171) is located on a side that is of the fastening part (163) and that is close to the flexible display (150), and the clamping member (172) is located on a side that is of the fastening part (163) and that is far away from the flexible display (150).

11. The foldable electronic device according to claim 10, wherein the flexible circuit board (160) comprises two second extension sections (162), one second extension section (162) is located on a side that is of one fastening part (163) and that is far away from the first extension section (161), each middle frame (120) has an accommodating cavity (121), a connection member (130) is disposed on a side that is of each middle frame (120) and that is close to the principal shaft (141), and the connection member (130) is located on a side that is of the rotating shaft assembly (140) and that is far away from the flexible display (150); and
on a same side of the principal shaft (141), an outer surface of a side that is of the middle frame (120) and that faces the principal shaft (141) has a mating surface (122), a through hole (181) is provided between the connection member (130) and the mating surface (122), the through hole (181) is communicated with the accommodating cavity (121), the clamping member (172) covers a part of the through hole (181), a gap (182) is provided between the clamping member (172) and the mating surface (122), and the second extension section (162) penetrates through the gap (182) and extends into the accommodating cavity (121).

12. The foldable electronic device according to claim 11, wherein the mating surface (122) comprises a first mating end (1221) close to the flexible display (150) and a second mating end (1222) far away from the flexible display (150), and the first mating end (1221) is disposed in an inclined manner in a direction close to the principal shaft (141).

13. The foldable electronic device according to claim 11, wherein an auxiliary mounting member (174) is disposed at the first end (1711) of each mounting member (171), and on a same side of the principal shaft (141), the auxiliary mounting member (174) is located between the second extension section (162) and the mating surface (122), a part of the clamping member (172) is located on a side that is of the second extension section (162) and that is far away from the flexible display (150), and a sealing member (183) is disposed in at least one of the following positions: between the auxiliary mounting member (174) and the mating surface (122), between the auxiliary mounting member (174) and the second extension section (162), and between the clamping member (172) and the second extension section (162).

14. The foldable electronic device according to any one of claims 1 to 3, further comprising a reinforcement member (173), wherein the reinforcement member (173) is located on at least one side of a thickness direction of the fastening part (163).
